# FASCICULE DE BREVET EUROPEEN

(11) **EP 1 409 923 B1**
(45) Date de publication et mention de la délivrance du brevet: **10.10.2007**
(21) Numéro de dépôt: 02753583.0
(22) Date de dépôt: 20.03.2002
(51) Int. Cl.: F23G 5/027, F23G 5/44, C10B 53/00

(54) **PROCEDE DE TRAITEMENT DES DECHETS INDUSTRIELS ET/OU MENAGERS ET INSTALLATION DE TRAITEMENT DES DECHETS INDUSTRIELS ET/OU MENAGERS**
INDUSTRIE- UND/ODER HAUSHALTSABFALLBEHANDLUNGSVERFAHREN UND ANLAGE ZUR BEHANDLUNG VON INDUSTRIE- UND/ODER HAUSHALTSABFALL
INDUSTRIAL AND/OR HOUSEHOLD WASTE TREATMENT METHOD AND AN INDUSTRIAL AND/OR HOUSEHOLD WASTE TREATMENT INSTALLATION

(30) Priorité: 20.03.2001 FR 0103772
(43) Date de publication de la demande: 21.04.2004
(73) Titulaire: Jeulin, Patrick, 28260 Rouvres (FR)
(72) Inventeur: Jeulin, Patrick, 28260 Rouvres (FR)
(74) Mandataire: Debay, Yves
(86) Numéro de dépôt international: PCT/FR2002/000978
(87) Numéro de publication internationale: WO 2002/075213

(56) Documents cités:
- EP-A- 0 692 677
- EP-A- 0 724 008
- EP-A- 1 002 767
- DE-A- 19 846 805
- FR-A- 510 495
- FR-A- 971 510
- FR-A- 976 074
- FR-A- 2 736 845

## Description

La présente invention concerne un procédé de traitement des déchets industriels et/ou ménagers. L'invention concerne également une installation de traitement des déchets industriels et/ou ménagers.

La thermolyse, par définition, consiste en la dissociation moléculaire en l'absence d'oxygène pour former principalement des solides carbonés et des gaz de thermolyse. Cette réaction libère plus d'énergie qu'elle n'en consomme. Le traitement s'opère sans aucune émission polluante sur des déchets non triés.

Les produits issus de la thermolyse sont :
- du charbon finement pulvérisé ;
- des stériles, non réactifs chimiquement tels que terre, gravats réduits en volume et en poids. Les métaux lourds sont piégés dans les matrices des solides carbonés ;
- du fer non oxydé, de l'aluminium et du verre valorisables dans les meilleures conditions, le fer pouvant être recyclé en aciérie, l'aluminium en fonderie, le cuivre en affinage et le verre propre en verrerie.

Il est connu du brevet EP 0 692 677, une installation de traitement thermique des déchets. Selon cet art antérieur les déchets sont traités par thermolyse et les solides carbonés issus de la thermolyse subissent une épuration. Cet art antérieur se particularise par le fait que les solides combustibles obtenus après épuration sont brûlés dans un foyer-cyclone, les gaz chauds formés par ce brûlage alimentant un moyen de récupération d'énergie. La thermolyse, selon cet art antérieur, est réalisée à l'aide d'un four tournant entouré d'une enveloppe équipée de moyens de combustion tels que des brûleurs. Les brûleurs sont alimentés par une partie des gaz de thermolyse issus de la thermolyse. Les déchets sont introduits directement dans le four pour être chauffés.

Cette installation de l'art antérieur présente des inconvénients majeurs. En effet, au bout d'un certain temps d'utilisation du four tournant, des déchets introduits dans le four forment une croûte solide sur la paroi interne du four. De ce fait, les nouveaux déchets introduits dans le four ne se trouvent plus directement en contact avec la paroi chaude du four et une quantité de chaleur plus importante doit être consommée pour les traiter. De plus, au bout d'un certain temps, les déchets chauffés dans le four, du fait de la rotation du four forment une tresse. Cette tresse peut venir boucher le sas d'évacuation des déchets, ce qui peut au bout d'un certain temps enflammer l'intérieur du four et ainsi l'endommager.

Par ailleurs, des installations de thermolyse sont connues, par exemple par les brevets EP 0 724 008, EP 0 610 120, ou EP 0 505 278, qui utilisent des chariots ouverts ou sur roulettes pour faire passer les déchets dans le four de thermolyse. Dans de tels chariots en simple translation, les déchets sont immobiles pendant leur passage dans le four, et leur forme ou épaisseur variable peut être la cause d'une thermolyse incomplète ou mal répartie. De tels chariots sur roulettes comportent également des pièces mobiles dont le fonctionnement peut être délicat du fait des conditions de chaleur et d'encrassement régnant dans le four.

Il est également connu, par le document FR-A-976 074, un procédé de carbonisation en cornues mobiles qui requiert un four particulier laissant sortir du four les extrémités libres des cornues. Un joint est requis pour permettre à l'extrémité du col de chaque cornue d'émerger hors du four tunnel. Les gaz générés dans les cornues sont alors transmis vers un collecteur disposé à côté du four ou vers une cloche collectrice baignant dans une auge.

La présente invention a pour objet de pallier des inconvénients de l'art antérieur.

Ce but est atteint par un procédé de traitement de déchets industriels et/ou ménagers selon la revendication 1, et une installation selon la revendication 15.

Un autre but de l'invention est de proposer une installation pour le traitement des déchets ménagers et/ou industriels pouvant mettre en oeuvre le procédé présenté ci-dessus.

Ce but est atteint par une installation pour le traitement des déchets industriels et/ou ménagers selon la revendication 15.

De plus, selon l'art antérieur développé plus haut, la quantité de solides carbonés formée par la thermolyse ne permet pas de capter toute la quantité des gaz acides ou d'halogènes produite lors de la décomposition de certains déchets tels que les déchets plastiques.

Un but de l'invention est de proposer un procédé et une installation de thermolyse permettant de diminuer la quantité de polluants s'échappant avec les gaz de thermolyse.

Ce but est atteint par un procédé selon la revendication 6, et une installation selon la revendication 23.

Par ailleurs, lorsque du charbon actif est utilisé pour filtrer ou épurer des gaz polluants, en particulier des gaz acides ou contenant des halogènes, ce charbon devient lui-même un déchet gênant. La seule combustion de ce charbon libérerait à nouveau ces polluants, et donc ne ferait que déplacer le problème de pollution.

Un but de l'invention est de proposer un procédé et une installation permettant de traiter ce charbon pollué pour en extraire les polluants.

Ce but est atteint par un procédé selon la revendication 11, et une installation selon la revendication 31.

Par ailleurs, les solides carbonés obtenus à partir de la thermolyse des déchets laissent subsister après épuration des cendres contenant des métaux lourds, qui peuvent être toxiques. De même, le traitement des charbons actifs pollués lors du filtrage de gaz acide laisse subsister des cendres contenant divers polluants, tels que des halogènes.

Ces cendres constituent donc encore un déchet gênant dont le seul enfouissement est une solution peu satisfaisante.

Un but de l'invention est de proposer un procédé et une installation permettant de traiter ces déchets de façon à en diminuer ces inconvénients.

Ce but est atteint par un procédé selon la revendication 13, et une installation selon la revendication 32.

Des développements supplémentaires de l'invention sont décrits dans les revendications dépendantes.

Les installations de traitement de déchets ménagers et/ou industriels sont très souvent couplées à un moteur thermique faisant fonctionner une turbine pour produire de l'électricité. Dans l'art antérieur, les installations sont communément couplées à des moteurs à gaz, à des turbines à gaz, à des installations fonctionnant suivant le cycle de Rankine. L'intégration de ces machines est souvent coûteuse et parfois peu rentable. Par exemple, les moteurs à gaz et les turbines à gaz sont des machines à combustion interne. Leur utilisation dans le cadre de la valorisation énergétique des gaz de thermolyse produits dans une installation de traitement par thermolyse comme selon l'invention, suppose au préalable de laver les gaz afin d'éviter toute dégradation des éléments du moteur thermique. Cette étape préalable obligatoire n'est pas intégrée dans le cycle normal de thermolyse et cela nécessite la conception d'un moyen pouvant la réaliser, ce qui augmente donc le coût de production.

Un des buts de l'invention est ainsi de proposer une installation de traitement de déchets industriels et/ou ménagers permettant une meilleure récupération de l'énergie dégagée au cours du cycle de thermolyse.

Ce but est atteint par une installation selon la revendication 36.

L'invention, avec ses caractéristiques et avantages, ressortira plus clairement à la lecture de la description faite en référence aux dessins annexés dans lesquels :
- la figure 1 représente l'installation de traitement de déchets selon l'invention,
- la figure 2 représente, en coupe transversale, les trois tunnels superposés,
- la figure 3 représente un conteneur selon l'invention,
- la figure 4 représente en coupe longitudinale, le conteneur selon l'invention,
- la figure 5 représente un conteneur servant pour le traitement hydrothermal selon l'invention,
- la figure 6 représente un piston creux selon l'invention,
- la figure 7 représente un schéma partiel de l'installation selon un mode de réalisation avec filtrage statique des gaz de thermolyse et où les tunnels sont alignés et inclinés, les conteneurs se déplaçant par roulage le long de cette pente,
- les figures 8a et 8b représentent une vue en coupe latérale du sas de sortie du tunnel de thermolyse, dans un mode de réalisation avec portes à guillotine,
- la figure 9 représente un schéma de fonctionnement du procédé de filtre statique et de séparation des polluants retenus lors du filtrage des gaz de thermolyse,
- la figure 10a représente un conteneur d'oxydation dans un mode de réalisation comportant une pompe haute pression,
- la figure 10b représente une vue schématique en coupe de côté d'un conteneur d'oxydation lors de l'oxydation des cendres, dans un mode réalisation comportant une pompe haute pression.

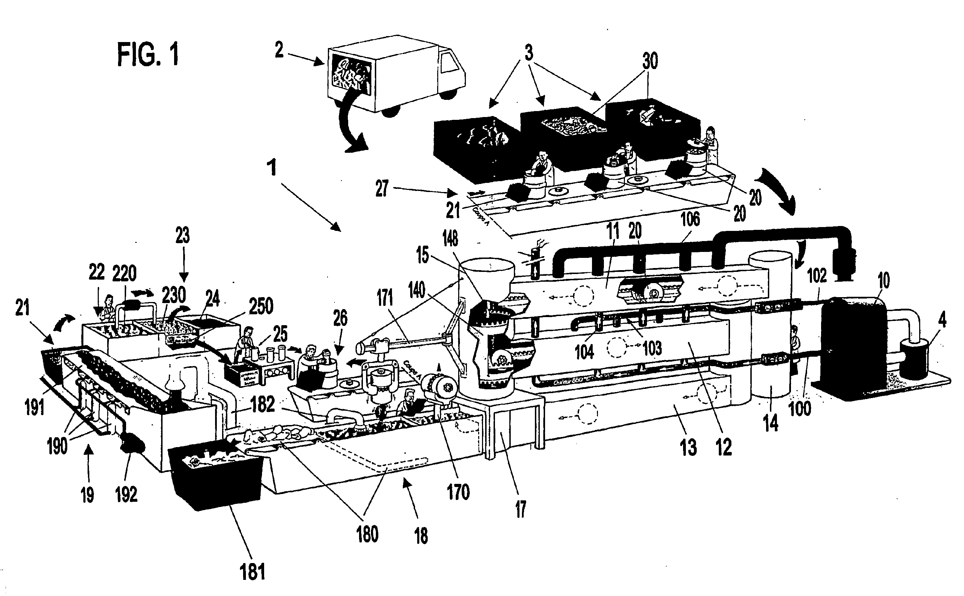

Nous allons à présent décrire l'invention en liaison avec les figures 1 à 10.

L'invention consiste notamment en un traitement par thermolyse de déchets non triés dans une installation (1) de traitement des déchets industriels et/ou ménagers.

Les déchets (30) arrivés par camion (2) sont stockés dans des bennes (3) de grande contenance comme représenté sur la figure 1.

Tout d'abord, les déchets (30) peuvent subir un broyage, de manière à les rendre plus petits et à augmenter leur surface d'éclairage. Ce broyage permet également de les homogénéiser.

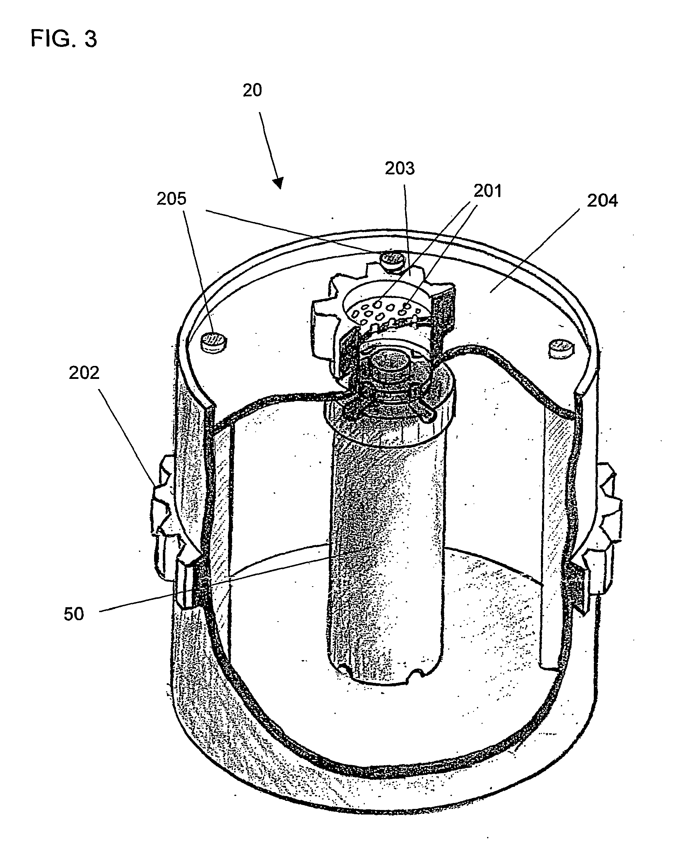

Les déchets (30), broyés ou non, sont placés, selon l'invention, dans des conteneurs (20) spécifiques au niveau d'un poste de remplissage (27). Ces conteneurs (20) sont en acier réfractaire inoxydable. Ils sont par exemple en forme de cylindre de révolution ayant, par exemple, une hauteur de 800 mm et un diamètre de 800 mm. Les conteneurs (20) ont un diamètre leur permettant de recevoir à plat un pneu de taille conventionnelle n'ayant subi aucun traitement préalable. Ces conteneurs (20), représentés en figure 3, sont percés de trous (201) de 3 mm de diamètre pour laisser s'échapper les gaz issus de la réaction thermique. Ces conteneurs (20) comprennent plusieurs couronnes (202, 203) dentées destinées à collaborer avec des crémaillères de l'installation (1) de traitement des déchets (30). Une première couronne (202), dite supérieure, entoure la surface latérale du conteneur (20), sensiblement au milieu de sa hauteur. Deux autres couronnes (203), dites d'extrémité, par exemple de diamètres égaux inférieurs au diamètre du conteneur (20), sont chacune fixées coaxialement sur une section de base (204) du conteneur (20). Les trous (201) percés dans les conteneurs (20) sont, par exemple, pratiqués dans les surfaces des sections de base (204) des conteneurs (20) et plus particulièrement à l'intérieur de la zone délimitée par les couronnes d'extrémité (203).

Les couronnes dentées (202, 203), en collaborant avec les crémaillères montées dans l'installation (1), assurent la rotation des conteneurs (20) dans l'installation (1), en particulier dans le four de thermolyse (12) permettant la réaction de thermolyse. Ces rotations sont en effet nécessaires pour favoriser la carbonisation de toutes les couches des déchets (30) à décomposer.

Les flèches sur la figure 1 symbolisent la succession des étapes de traitement des déchets dans l'installation (1) selon l'invention.

Selon l'invention, l'installation (1) de traitement de déchets industriels et/ou ménagers se présente de la manière suivante.

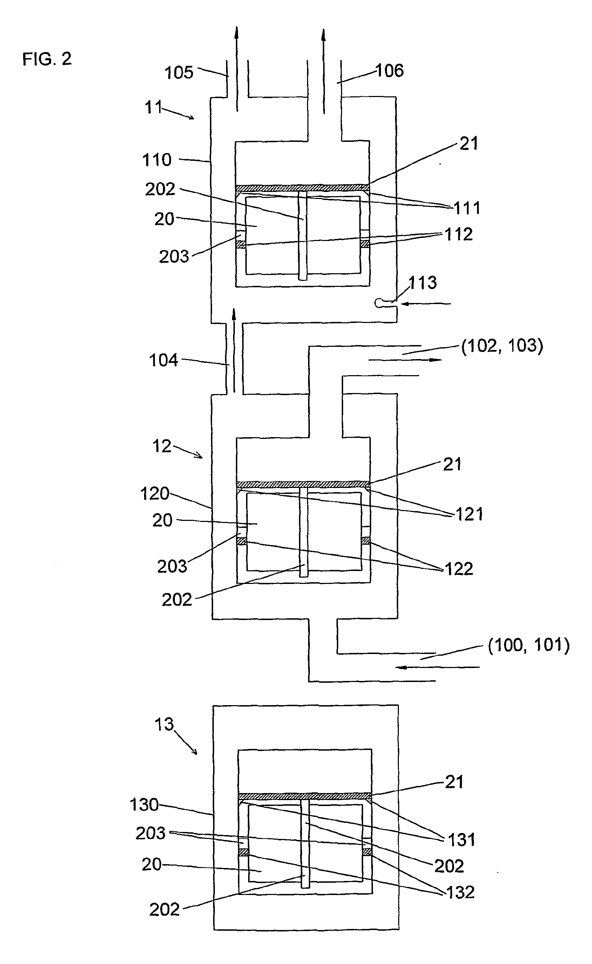

L'installation (1) selon l'invention comprend notamment trois tunnels (11, 12, 13) superposés et parallèles au sol. Un premier tunnel (11), situé en haut constitue un sécheur, un deuxième (12), situé juste en dessous, constitue le four de thermolyse, et un troisième (13), encore en dessous, est un bassin de déchloruration. Les tunnels (11, 12, 13) ont, par exemple, une section sensiblement carrée et comprennent une coque (110, 120, 130) creuse, comme représenté sur la figure 2, pouvant laisser passer la chaleur créée pour la réaction de thermolyse. Selon l'invention, l'installation (1) comprend également trois cylindres (14, 15, 16) comprenant chacun un piston (140) de transport d'un conteneur (20) de déchets (30). Ces trois cylindres (14, 15, 16) sont disposés verticalement et comprennent des ouvertures communiquant avec les entrées ou les sorties des tunnels pour relier les différents tunnels entre eux. Un premier cylindre (14) est destiné à l'introduction des conteneurs (20) dans le sécheur (11) par translation de son piston (140) suivant son axe depuis un poste d'introduction des conteneurs (20) par un opérateur jusqu'à l'entrée du sécheur (11). Un deuxième cylindre (15) est positionné en sortie du sécheur (11) pour réceptionner les conteneurs, le piston (140) se translatant vers le bas après réception pour amener ces conteneurs (20) en entrée du four de thermolyse (12). Un troisième cylindre (16) est disposé en sortie du four de thermolyse (12) pour réceptionner les conteneurs (20), son piston (140) se translatant vers le bas pour les amener en entrée du bassin de déchloruration (13). Chaque cylindre (14, 15, 16) comprend donc une ouverture de chargement des conteneurs (20) et une ouverture de déchargement des conteneurs (20). Le premier cylindre (14) a son ouverture de chargement située en bas pour introduire un conteneur (20) et son ouverture de déchargement en face de l'entrée du tunnel (11) du sécheur. Le deuxième cylindre (15) a son ouverture de chargement en face de la sortie du tunnel (11) du sécheur et son ouverture de déchargement en face de l'entrée du tunnel (12) du four de thermolyse. Enfin le troisième cylindre (16) a son ouverture de chargement en face de la sortie du tunnel (12) du four de thermolyse et son ouverture de déchargement en face de l'entrée du tunnel (13) du bassin de déchloruration.

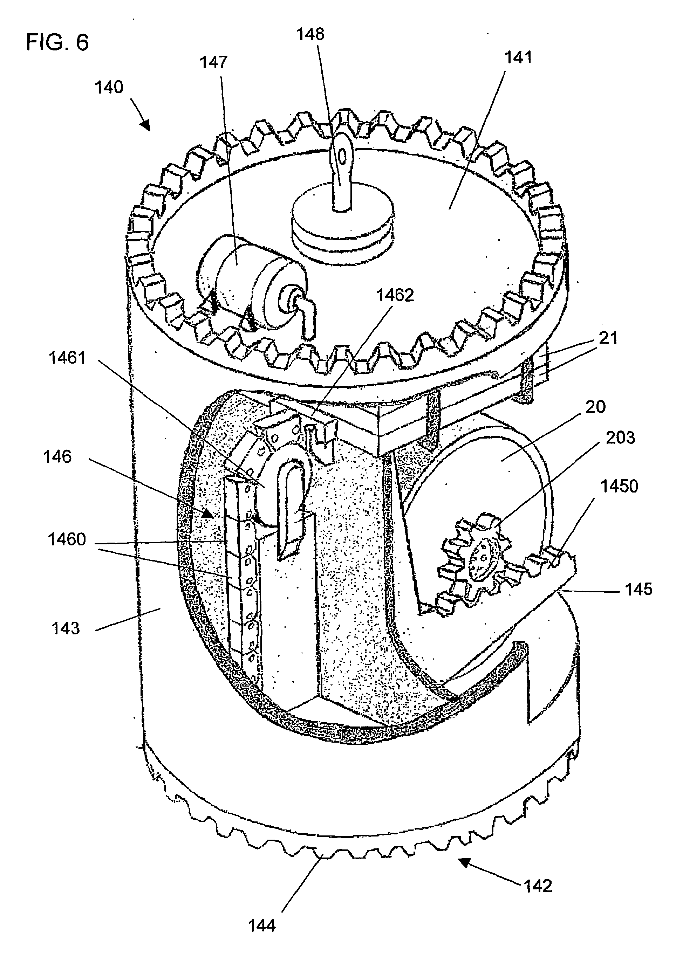

Les pistons (140) des cylindres (14, 15, 16) sont creux, comme représenté en figure 6. Ils sont de forme cylindrique et comprennent de manière connue une face supérieure (141), une face inférieure (142) et une surface latérale (143) disposée entre la face supérieure et la face inférieure et définie par la surface en vis-à-vis de la paroi interne du cylindre (14, 15, 16). Ils ont leurs faces supérieure (141) et inférieure (142) munies de dents (144) formant une couronne sur chacune de ces faces. Cette couronne est destinée à collaborer avec des- moyens pour déplacer le piston (140) en rotation lorsque celui-ci vient en butée contre le haut du cylindre (14, 15, 16) ou contre le fond de celui-ci. Chaque piston (140) est actionné de manière connue par une tige (148), comme représenté sur les figures 1 et 6. Les pistons (140) des cylindres (14, 15, 16) ont leur surface latérale (143) partiellement ouverte pour laisser rentrer, notamment, un conteneur (20) rempli de déchets (30). La partie pleine de la surface latérale (143) est d'une taille suffisante pour obturer de manière étanche l'entrée ou la sortie d'un tunnel (11, 12, 13). Le piston (140) creux comprend, pour réceptionner un conteneur (20), un support (145) comprenant deux rangées (1450) de dents dirigées vers le haut et écartées d'une certaine distance. Dans la partie supérieure de ce piston (140) creux est empilé un certain nombre d'éléments métalliques, dits éléments (21) de motorisation, comprenant du charbon actif. Le plus bas de ces éléments (21) de motorisation empilés, est en vis-à-vis d'un système (146) de chaîne pousseuse situé à l'intérieur du piston (140) creux. Ce système (146) de chaîne pousseuse est destiné à assurer l'introduction et l'actionnement des éléments (21) de motorisation contenant les charbons actifs dans les tunnels (11, 12, 13) sur une rampe (111, 121, 131) aménagée dans la partie supérieure de chaque tunnel, comme représenté en figure 2. Le système (146) de chaîne pousseuse est constitué d'une chaîne à plusieurs maillons (1460) collaborant avec un engrenage (1461) actionné, par exemple par un moteur, pour provoquer le déplacement de la chaîne. La chaîne pousseuse comprend à une de ses extrémités, un moyen (1462) de poussée. Ce moyen (1462) de poussée est disposé, en position de repos de la chaîne pousseuse, en appui contre l'élément (21) de motorisation le plus bas des éléments (21) de motorisation empilés. Lorsque la chaîne pousseuse est actionnée, elle pousse sur la rampe (111, 121, 131), par le moyen (1462) de poussée suivant une direction parallèle à l'axe du tunnel (11, 12, 13), cet élément (21) de motorisation le plus bas qui pousse donc également tous les autres éléments (21) de motorisation déjà introduits sur la rampe (111, 121, 131) du tunnel (11, 12, 13) considéré. La chaîne pousseuse revient alors dans sa position de repos et un nouvel élément (21) de motorisation de la pile se positionne en face du moyen (1462) de poussée de la chaîne pousseuse et le cycle peut reprendre. L'introduction d'un élément (21) de motorisation sur la rampe (111, 121, 131) d'un tunnel (11, 12, 13), provoque le déchargement d'un élément (21) de motorisation dans le piston (140) creux du cylindre (14, 15, 16) situé en sortie du tunnel. Les éléments (21) de motorisation sont des éléments, par exemple de forme parallélépipédique, et qui occupent toute la largeur des tunnels (11, 12, 13) pour s'interposer entre les conteneurs (20) en déplacement et des conduits d'évacuation des gaz de thermolyse, afin de piéger tous les polluants issus de la réaction de thermolyse autres que les gaz de thermolyse. Ces éléments (21) de motorisation sont destinés à assurer le mouvement moteur et la rotation des conteneurs (20) à déchets (30) dans l'installation (1) de traitement. Pour cela, ils disposent sur leur face inférieure métallique, de dents formant, lorsqu'ils sont jointifs sur la rampe (111, 121, 131), une crémaillère collaborant avec la couronne (202) dentée supérieure des conteneurs (20) de déchets (30). Les éléments (21) de motorisation sont insérés dans le piston (140) creux du premier cylindre (14) par un opérateur puis délivrés par le système (146) de chaîne pousseuse dans le tunnel (11) du sécheur. Ils sont ensuite réceptionnés dans le piston (140) creux du deuxième cylindre (15) pour être délivrés dans le tunnel (12) du four de thermolyse. Ils sont enfin réceptionnés dans le piston (140) creux du troisième cylindre (16) pour être réintroduits dans le tunnel (13) du bassin de déchloruration avant d'être définitivement récupérés en sortie du bassin de déchloruration pour être réintroduits dans le premier cylindre (14). Environ quatre éléments (21) de motorisation doivent passer sur un conteneur (20) pour lui faire effectuer un tour complet.

Les charbons actifs sont des matériaux assez puissants permettant une élimination des matières organiques contenues dans l'eau. Les charbons actifs sont des formes très poreuses du carbone que l'on obtient en carbonisant à l'abri de l'air des composés carbonés à forte teneur en oxygène, tels que, par exemple, les charbons bitumeux, la lignite, le bois, les coques de noix de coco,... On augmente le pouvoir adsorbant de ces charbons en éliminant les hydrocarbures qui restent adsorbés dans leurs pores soit par de la vapeur d'eau soit par un mélange constitué de vapeur d'eau et d'air. Ces matières sont généralement activées techniquement vers 800°C et 1000°C de manière à créer des pores de quelques Angstrôms de diamètre à l'intérieur desquels les composés vont se fixer. L'activation peut aussi se faire chimiquement avec un agent déshydratant à une température comprise entre 400°C et 600°C. Certains charbons actifs sont même imprégnés de métaux ou de sels minéraux afin d'améliorer l'absorption des polluants. La taille des pores sera fonction des composés que l'on souhaite éliminer. Par exemple, les faibles concentrations de micro-polluants seront mieux éliminées sur des charbons microporeux, c'est-à-dire ayant des pores inférieurs à 20 Angströms.

Les tunnels (11, 12, 13) sont, par exemple, à section sensiblement carrée. Les tunnels (11, 12, 13) sont des constructions mécano-soudées inoxydables. A l'intérieur de ces tunnels (11, 12, 13), dans un plan sensiblement horizontal, sont montées deux crémaillères (112, 122, 132) de guidage, fixées respectivement sur les deux faces opposées de la paroi interne des tunnels (11, 12, 13). Chaque crémaillère (112, 122, 132) a ses dents dirigées vers le haut. Dans chaque tunnel (11, 12, 13), les deux crémaillères (112, 122, 132) sont écartées dans le plan horizontal d'une distance correspondant à la distance entre les deux couronnes dentées (203) d'extrémité d'un conteneur (20) à déchets. Ainsi, un conteneur (20) est destiné à être disposé horizontalement suivant son axe de révolution, sur ses deux couronnes dentées (203) d'extrémité sur les deux crémaillères (112, 122, 132) de guidage d'un tunnel (11, 12, 13). Les crémaillères (112, 122, 132) de guidage permettent en outre d'assurer la rigidité des tunnels (11, 12, 13). Lorsqu'un piston (140) d'un cylindre (14, 15,16) est positionné en entrée ou en sortie d'un tunnel (11, 12, 13) pour, respectivement, décharger un conteneur (20) de déchets (30) dans le tunnel (11, 12, 13) ou charger un conteneur (20) de déchets (30) étant passé dans le tunnel (11, 12, 13), il est positionné dans le cylindre (14, 15, 16), de sorte que son support (145) de conteneur (20), comprenant deux rangées (1450) de dents écartées de la même distance que celle séparant les deux crémaillères (112, 122, 132) de guidage, se trouve à hauteur de ces deux crémaillères (112, 122, 132) de guidage du tunnel (11, 12, 13). Ainsi le plateau prolonge les deux crémaillères (112, 122, 132) pour décharger son conteneur (20) mis en mouvement par les éléments (21) de motorisation sur ces crémaillères (112, 122, 132) ou pour charger un conteneur (20) mis en mouvement par les éléments (21) de motorisation en direction du piston (140).

Lorsque le conteneur (20) est rempli de déchets (30) à traiter, celui-ci est fermé par son couvercle constituant sa face supérieure (204) supportant une couronne (203) dentée d'extrémité. Le couvercle est fermé par un système de goupilles bétas (205). Les conteneurs (20) remplis de déchets (30) et fermés sont chargés dans le piston (140) creux du premier cylindre (14) ayant sa partie ouverte en vis-à-vis de l'ouverture de chargement du premier cylindre (14). Ce chargement pourra être effectué, par exemple, par un dispositif d'introduction muni d'un bras saisissant un par un, les conteneurs (20) en position verticale et comprenant un moyen pour retourner les conteneurs (20) afin de les mettre dans une position horizontale. Le piston (140) creux de ce premier cylindre (14), une fois chargé d'un conteneur (20) de déchets et d'un certain nombre d'éléments (21) de motorisation, par exemple cinq, remonte dans le cylindre puis pivote à 180° dans le cylindre (14) pour mettre en vis-à-vis sa partie latérale ouverte avec l'entrée du tunnel (11) du sécheur.

En sortie du sécheur (11), le conteneur (20), mis en mouvement par les éléments (21) de motorisation, s'introduit dans le piston (140) creux du deuxième cylindre (15) alors dans une position haute. Le piston (140) descend alors d'une distance suffisante pour recevoir, par exemple, cinq éléments (21) de motorisation à charbons actifs. Le piston (140) pivote alors de 180° dans son cylindre (15), obturant alors la sortie du sécheur (11). Le piston (140) du troisième cylindre (16) est alors en position pour obturer soit l'entrée du tunnel (13) du bassin de déchloruration soit la sortie du tunnel (12) du four de thermolyse. Une pompe à vide (147), par exemple fixée sur la face supérieure (141) du piston (140), est alors chargée de faire le vide dans le four de thermolyse (12) fermé hermétiquement par la position des pistons (140) des deuxième (15) et troisième (16) cylindres. Une fois le vide réalisé, le piston (140) du deuxième cylindre (15) descend pour se placer dans l'axe du tunnel (12) du four de thermolyse. Le piston (140) pivote alors de 180° dans le cylindre (15) pour positionner sa partie latérale ouverte en vis-à-vis de l'entrée du tunnel (12) du four de thermolyse. Le système (146) de chaîne pousseuse intégré au piston (140) s'anime alors pour introduire les éléments (21) de motorisation mettant en mouvement le conteneur (20) contenu dans le piston (140), dans le four de thermolyse (12) vide d'air. Le piston (140) pivote alors de nouveau de 180° puis remonte jusqu'à se positionner dans l'axe du tunnel (11) du sécheur. Il pivote alors de nouveau de 180° et un nouveau cycle, tel que décrit ci-dessus, peut commencer.

Le tunnel (12) du four de thermolyse est, comme le tunnel (11) du sécheur, une construction mécano-soudée à coque (120) creuse. Contrairement aux autres tunnels (11, 13), le tunnel (12) du four de thermolyse est fabriqué à base d'acier inoxydable réfractaire de type NS30 qui dispose de caractéristiques et de performances garanties nettement supérieures aux contraintes maximales imposées par la réaction de thermolyse pratiquée. Le tunnel (12) du four de thermolyse est une construction fixe, sans joints dynamiques. Il est constitué de tôles pliées, de manière à constituer des caissons (non représentés) de 1,5 m de long assemblés, les tôles ayant une épaisseur de 8 mm. Les deux caissons de chaque extrémité du four de thermolyse (12) ne sont pas chauffés, de manière à pouvoir contrôler thermiquement les zones de chargement et de déchargement des conteneurs (12), respectivement en entrée du four de thermolyse (12) et en sortie du four de thermolyse (12). Comme pour le tunnel (11) du sécheur, la rampe (121) est destinée à guider les éléments (21) de motorisation des conteneurs (20) le long du tunnel (12), comme représenté sur la figure 2.

La température entretenue à l'intérieur du four de thermolyse sera comprise entre 400°C et 500°C, celle-ci pouvant faire l'objet d'un réglage, ceci pour éviter d'éventuels incidents avec l'oxygène.

Comme représenté sur la figure 1, un incinérateur (10) de gaz comprenant des brûleurs est chargé de créer la chaleur nécessaire pour la réaction de thermolyse. La chaleur apportée par l'incinérateur sera de 850°C, de manière à obtenir dans le four de thermolyse (12) une température comprise entre 400°C et 500°C. Cet incinérateur (10) comprend notamment une sortie matérialisée par un premier conduit (100) permettant de véhiculer la chaleur produite vers le four de thermolyse (12) et une entrée matérialisée par un deuxième conduit (102) destiné à récupérer les gaz s'échappant lors de la réaction de thermolyse sur les déchets (30) contenus dans les conteneurs (20). Le premier conduit (100) se divise en plusieurs conduits (101) parallèles menant dans la coque (120) du four de thermolyse (12), ces conduits (101) reliant la coque (120) du four de thermolyse (12) à plusieurs endroits le long de sa longueur, de manière à obtenir une répartition de la chaleur la plus uniforme possible dans le four de thermolyse (12). Le deuxième conduit (102) se divise également en plusieurs conduits (103) joignant l'intérieur du four de thermolyse (12) à plusieurs endroits pour récupérer les gaz de thermolyse s'échappant lors de la réaction de thermolyse sur les déchets (30) par les trous (201) percés dans les conteneurs (20). Les gaz issus de la décomposition des déchets (30) créée par la thermolyse sont donc évacués vers l'incinérateur (10) au travers de la pluralité de conduits (102, 103), dont la température est particulièrement contrôlée pour éviter que des gaz polluants s'échappent. Cette évacuation est symbolisée par la flèche en trait plein sur la figure 2. Cette température doit rester toujours comprise entre 272°C correspondant au point de rosée des hydrocarbures et 357°C correspondant au point d'ébullition du mercure. La pluralité de conduits (102, 103) sera donc refroidie ou réchauffée pour rester dans cette espace de température pour ainsi s'assurer de la condensation du mercure et s'affranchir du point de rosée des hydrocarbures. Les éléments dont les points d'ébullition sont inférieurs à 280°C sont les suivants :
- le fluor, l'iode, le chlore et le brome, c'est-à-dire les halogènes. Tous ces éléments sont donc piégés dans les charbons actifs des éléments de motorisation interposés entre les conduits d'évacuation des gaz de thermolyse et les conteneurs de déchets. Ces composés sont également piégés en partie par les charbons actifs formés par la réaction de thermolyse sur les déchets.
- l'hélium, le néon, l'argon, le krypton, le xénon et le radon sont des gaz inertes.

Les éléments restants dont les points de rosée sont situés en dessous de l'espace de température sont l'hydrogène, l'oxygène, qui se combinent avec le carbone pour fournir les gaz de thermolyse non piégés par les éléments de motorisation à charbons actifs et passant par les conduits (103) parallèles du deuxième conduit (102). Les gaz de thermolyse sont donc constitués de H2 (dihydrogène) à hauteur de 11 %, de CH4 (méthane) à hauteur de 15%, de CO (monoxyde de carbone) à hauteur de 20%, de CO2 (dioxyde de carbone) à hauteur de 30%, de C2H4 (éthylène) à hauteur de 6%, de C2H6 (éthane) à hauteur de 5% et d'autres hydrocarbures en compagnie de vapeur d'eau à hauteur de 13%.

Les gaz de thermolyse évacués du four de thermolyse (12) vers l'incinérateur (10) par le deuxième conduit (102) sont donc exempts de tout polluant et constituent de parfaits combustibles pour être brûlés dans l'incinérateur (10) pour former des gaz de combustion. Une partie de ces gaz de combustion peut alimenter en chaleur le four de thermolyse (12) de manière à entretenir la réaction de thermolyse dans le four de thermolyse (12).

Une autre partie des gaz de combustion obtenus par la combustion d'une partie des gaz de thermolyse pourra être utilisée pour alimenter un moyen récupérateur d'énergie, tel qu'un moteur de Stirling (4), éventuellement modifié par Ericsson actionnant, par exemple, un alternateur. Le moteur de Stirling modifié par Ericsson présente la particularité de disposer d'un rendement très important. Il présente également l'avantage de fonctionner selon un mécanisme de combustion externe, c'est à dire que la combustion du carburant ne se fait pas à l'intérieur du mécanisme central du moteur. De ce fait, les risques d'encrassement et d'irrégularités de combustion dûs à la composition hétérogène des gaz de thermolyse présentent beaucoup moins de difficultés que pour un moteur à combustion externe.

La création de chaleur dans l'incinérateur (10), avant la récupération des premiers gaz issus de la thermolyse, est initiée à l'aide d'un combustible, tel que, par exemple, du propane. Ce combustible pourra servir également de combustible de réserve au cas où une quantité insuffisante de gaz de thermolyse serait produite par la réaction.

Le four de thermolyse (12) comprend également des conduits (104) d'évacuation de la chaleur régnant au sein de sa coque (120). Ces conduits (104) joignent la coque (110) du sécheur (11) placé juste au-dessus du four de thermolyse (12). Cette chaleur régnant dans la coque (110) du sécheur (11) est directement réutilisée pour sécher les déchets (30) avant leur introduction dans le four de thermolyse (30). De même, le sécheur comprend une arrivée d'air (113) symbolisée par la flèche en trait plein sur la figure 2 et un conduit (105) d'évacuation de la chaleur vers l'extérieur du tunnel (11) et une pluralité de conduits (106) traversant la coque pour relier l'intérieur du sécheur à l'extérieur pour permettre l'évacuation de la vapeur d'eau formée par le séchage des déchets (30) dans les conteneurs (20). Cette évacuation est symbolisée sur la figure 2 par la flèche en trait plein. Cette vapeur d'eau peut, par exemple, être récupérée pour alimenter, à l'aide d'un condenseur, un bassin. Le mouvement de la chaleur est symbolisé sur la figure 2 par les flèches en trait plein.

Le chargement des conteneurs (20) et des éléments de motorisation dans le troisième cylindre en sortie du four de thermolyse (12) est identique au chargement en sortie du sécheur (11). Toutefois ce déchargement des conteneurs (20) et des éléments (21) de motorisation dans le bassin de déchloruration situé juste au-dessous du four de thermolyse (12) présente la particularité d'être réalisé sous le niveau de l'eau, de manière à éviter toute entrée d'air.

Dans le bassin de déchloruration (13), sont lavés les charbons actifs constitués des solides carbonés formés par la réaction de thermolyse sur les déchets et contenus dans les conteneurs (20) et de ceux compris dans les éléments (21) de motorisation ayant piégé les gaz polluants. Cette opération de lavage a pour but d'éliminer les halogènes, en particulier le chlore, de ces composés. Des conditions particulières de lavage sont nécessaires afin d'obtenir une parfaite séparation des halogènes des charbons actifs. L'opération de lavage consiste à épurer le carbone formant les éléments de motorisation et les solides carbonés en produisant, par exemple, des chlorures en combinant, par exemple les ions chlores polluant les charbons actifs avec des cations contenus dans l'eau du bassin de déchloruration tels que Na+ (ion sodium), K+ (ion potassium), Ca2+ (ion calcium)...

Après le lavage dans le bassin de déchloruration, les conteneurs (20) ainsi que les éléments (21) de motorisation sont amenés dans un quatrième cylindre (17) situé juste sous le deuxième cylindre (15) et traversé par le bassin de déchloruration (13). Les conteneurs et les éléments de motorisation sont donc toujours dans l'eau lorsqu'ils sont dans le quatrième cylindre (17). Les conteneurs (20) sont alors extraits du quatrième cylindre (17) et de l'eau par un bras (170), alors que les éléments (21) de motorisation sont saisis par un opérateur au fond du bassin (13). Ensuite, les conteneurs (20) sont saisis par un autre bras (171) pouvant être, par exemple, similaire à celui utilisé dans le dispositif d'introduction et sont mis en position verticale. Dans cette position, les goupilles bétas (205) sont ôtées pour retirer le couvercle, ces deux éléments étant disposés sur un tapis roulant les ramenant vers le poste de remplissage (27) des conteneurs (20) en déchets. Le conteneur (20) toujours supporté par le bras et son contenu sont vidés dans un bassin (18) adjacent au bassin de déchloruration (13) et prolongeant celui-ci.

A ce stade, les solides carbonés formés par la thermolyse des déchets flottent à la surface du bassin (18) avec souvent des morceaux d'aluminium très fins. Ces éléments sont pompés à l'aide d'une pompe (182) pour être amenés sur un filtre (19) à bande équipé de résines (190) échangeuses d'ions. Les éléments restants de la réaction de thermolyse, métaux et minéraux se retrouvent au fond du bassin (18). Ils sont parfaitement propres d'un point de vue chimique et très facilement identifiables en utilisant, par exemple, les courants de Foucault. Ils ne sont pas oxydés et sont très faciles à valoriser. Dans le fond du bassin (18), ils tombent sur un tapis roulant (180) permettant de les sortir du bassin et de les convoyer vers un moyen de récupération tel qu'une benne (181).

Le filtre (19) à bande est constitué d'un tapis roulant (191) percé de très petits trous à travers desquels est créée une dépression à l'aide d'un système Venturi (192) permettant d'emporter l'eau chargée en sel des solides carbonés sur les résines (190) échangeuses d'ions. Ces résines (190) ont dans leur structure moléculaire, des radicaux acides et basiques susceptibles de permuter respectivement avec des ions métalliques et des anions comme les chlorures. Ces résines sont traitables, ce qui permet de réutiliser l'eau emportée des solides carbonés.

Après le passage sur le filtre (19) à bande, les solides carbonés séchés sont finement broyés et tamisés (21), de manière à isoler les éventuels éléments inertes susceptibles d'être encore présents à ce niveau du traitement. Le produit alors devenu pulvérulent est exploité dans un bassin (230) dans une flottation (23) précédée d'une agitation (22) dans un autre bassin (220) adjacent, de manière à séparer les éléments carbonés et les éléments cendreux. Les éléments carbonés vont s'agglomérer en surface du bassin (230) de flottation avec un corps gras, tel que, par exemple, de l'huile filtrée ou du fioul que l'on aura ajouté lors de l'agitation dans le bassin d'agitation (220). Les éléments cendreux vont aller naturellement au fond du bassin (230) de flottation. Les éléments carbonés récupérés sont alors aptes à être réutilisés dans tous types de procédés thermiques. En revanche, les éléments cendreux comprenant en particulier les métaux lourds font l'objet d'un traitement particulier.

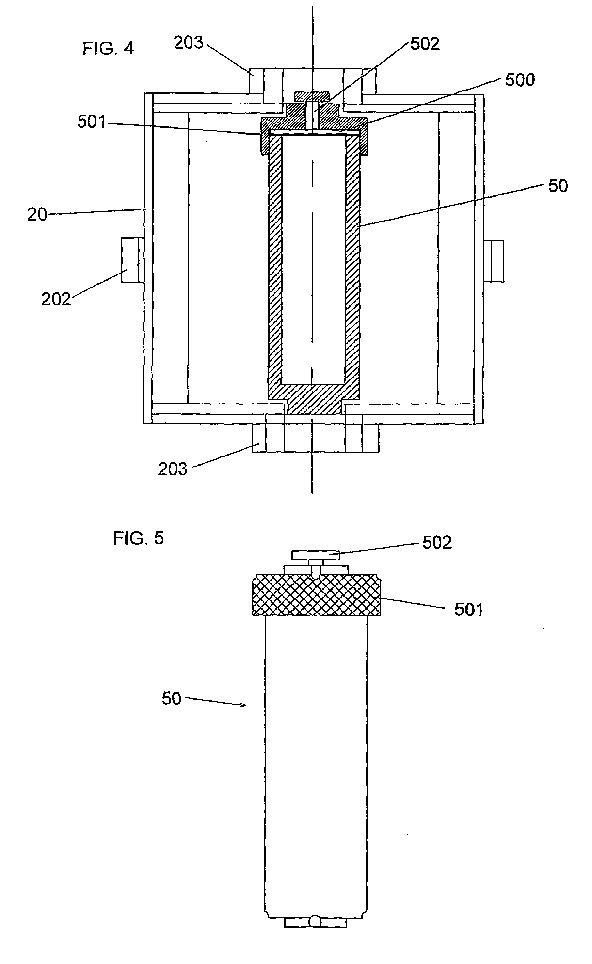

Ce traitement consiste en un traitement hydrothermal (25) permettant d'oxyder les métaux lourds. Selon l'invention, ce traitement est réalisé dans des conteneurs (50) spécifiques ou conteneurs d'oxydation, par exemple de forme cylindrique et représentés en figure 5. Ces conteneurs (50) d'oxydation sont remplis, par exemple par un opérateur, avec une petite quantité de matières cendreuses, le volume du conteneur (50) étant complété par un volume d'eau additionné ou non d'un oxydant. Un disque (500) métallique est placé pour refermer le conteneur (50). Un couvercle (501) vient ensuite se visser sur une partie filetée formée sur la surface latérale extérieure du conteneur (50), de manière à venir bloquer par serrage le disque métallique (500). Ce couvercle (501) est taraudé en son centre sur toute son épaisseur. Une vis, dite de pression, ayant un corps de vis d'une longeur supérieure à l'épaisseur du couvercle, vient se visser dans ce taraudage du couvercle (501) pour venir en contact avec la face du disque (500) métallique en appui contre le couvercle (501) et de manière à déformer le disque (500) métallique. Cette déformation provoque très vite une montée de la pression de l'eau en contact avec la face du disque (500) opposée à celle en appui contre le couvercle (501). Le conteneur (50) a des dimensions pour être inséré dans un conteneur (20) de déchets en étant, par exemple, fixé coaxialement sur le conteneur (20) de déchets, comme représenté en figure 4. Le conteneur (50) a des dimensions de sorte à pouvoir s'insérer dans l'espace libre formé au milieu d'un pneu. L'étape (26) d'introduction de ce conteneur (50) dans le conteneur (20) de déchets est préalable à l'étape (27) de chargement en déchets du conteneur (20) de déchets, comme représenté en figure 1. Une fois le conteneur (50) inséré dans le conteneur (20) de déchets et ce conteneur (20) de déchets rempli de déchets à traiter par thermolyse, le conteneur (20) de déchets est refermé et introduit dans l'installation (1) de traitement selon la description faite ci-dessus. Une fois parvenue dans le four de thermolyse (12), l'eau comprise dans le conteneur (50) est chauffée jusqu'à atteindre et dépasser son point supercritique situé à une température de 374°C et une pression de 221 bars. Au-delà de ce point supercritique, se produit la réaction hydrothermale de l'eau. Cette réaction hydrothermale se caractérise par le fait que l'eau est oxydée et oxyde également tout ce qu'elle contient et en particulier, selon l'invention, les matières cendreuses comprenant les métaux lourds. Ainsi à l'issue de ce traitement hydrothermal, il n'y aura que des oxydes de métaux, autrement dit des éléments tels qu'ils existent à l'état naturel sous forme de minerais.

### (complément de description)

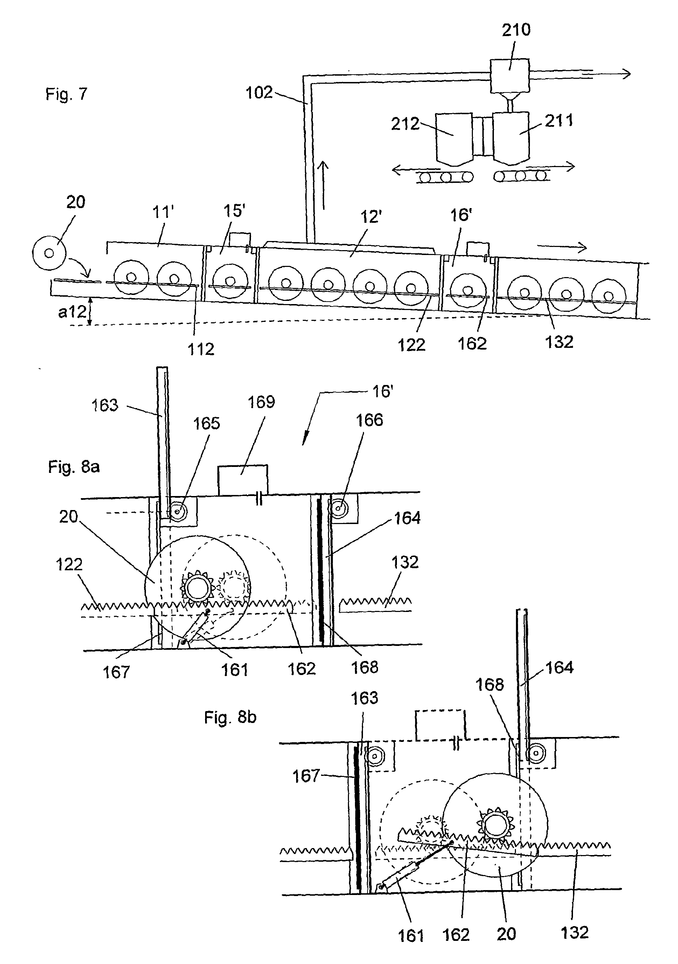

Dans le mode de réalisation décrit ci-dessous et représenté en figures 7 à 9, les gaz de chauffage du tunnel de thermolyse ne sont pas utilisés pour le chauffage du tunnel de séchage. Il est toutefois évident que cette variante est également applicable aux autres modes réalisation. De même il est tout à fait possible de prévoir un tunnel de séchage chauffé comme décrit pour les modes de réalisations illustrés en figures 1 à 6.

Selon un mode de réalisation illustré en figures 7 à 8b, les différentes étapes de traitement s'appliquant aux déchets en conteneurs (20) sont effectuées lors d'un convoyage de ces conteneurs dans des tunnels (11', 12', 13') situés sensiblement sur un même niveau entre eux.

Le tunnel (12') de thermolyse est alors alimenté en conteneurs (20) par une portion de tunnel comportant deux portes formant un sas (15') d'entrée en amont, et deux autres formant un sas (16') de sortie en aval. Ces portes peuvent par exemple être des portes (163, 164 )guillotines, déplacées entre une position ouverte et une position fermée selon une translation dans un plan sensiblement perpendiculaire à la direction de convoyage des conteneurs. Ces portes sont déplacées par des moyens d'actionnement, par exemple un moteur entraînant un pignon (165, 166) denté agissant sur une crémaillère solidaire de la porte (163, respectivement 164) et disposée dans le plan de son déplacement. Pour permettre le maintien en basse pression de la zone de thermolyse, une étanchéité peut alors être assurée par des moyens d'étanchéité disposés sur le pourtour de la porte. Ces moyens d'étanchéité comprennent par exemple un ou plusieurs joints (167, 168) gonflables aptes à résister aux pressions et aux températures présentes dans cette zone. A titre d'exemple, un tel joint gonflable peut être prévu pour maintenir une étanchéité jusqu'à environ 6 bars, et résister de façon prolongée à des températures de l'ordre de 250°C.

Dans ce mode de réalisation, un ou plusieurs tunnels sont disposés selon une pente formant un angle (a12) avec le sol, et le déplacement des conteneurs (20) à l'intérieur des ces tunnels se fait par un roulage sous l'effet de la gravité. Dans ce cas, ce roulage n'utilise pas d'éléments (21) de motorisation tels que décrits plus haut et les conteneurs peuvent ne pas comporter de grande couronne (202) dentée sur leur périphérie. Les conteneurs sont supportés et guidés par des couronnes (203) d'extrémité, qui peuvent être dentées et roulent sur des crémaillères (112, 122, 132) latérales ou annexes disposées le long du parcours de convoyage des conteneurs, en particulier le long des parois internes des tunnels. Ces crémaillères peuvent comporter des parties mobiles sur tout ou partie de leur longueur. Ces parties mobiles peuvent être actionnées par des moyens de mobilisation, par exemple des vérins hydrauliques ou pneumatiques, de façon à lancer ou relancer le mouvement des conteneurs, ou permettre le franchissement de certaines portions dépourvues de crémaillères, en particulier pour le passage d'une porte. Pour lancer ou relancer le mouvement d'un conteneur (20) situé dans un endroit donné du chemin de convoyage, une portion (162) mobile de crémaillère est inclinée de façon plus accentuée par une rotation autour d'un axe sensiblement horizontal sous l'effet d'un vérin (161), ce qui déclenche ou accélère le mouvement du conteneur reposant sur cette même partie mobile. Un tel déclenchement est illustré en figures 8a et 8b, pour une portion de chemin de convoyage située à l'intérieur d'un sas, par exemple le sas (16') de sortie du tunnel (12') de thermolyse.

Lors de l'arrivée d'un conteneur en fin de zone de thermolyse, une pompe à vide (169) amène le sas (16') à une pression proche de celle de l'intérieur du tunnel de thermolyse. Puis, le joint (167) de la porte (163) amont du sas (16') de sortie de thermolyse se dégonfle et la porte s'ouvre par une translation vers le haut. Sous l'effet d'un vérin (161) associé à des moyens de guidage (non représentés), une portion de crémaillère, dite crémaillère (162) de sas, est déplacée jusqu'à assurer une continuité avec la crémaillère (122) annexe de support et de guidage du tunnel (12') de thermolyse. Le conteneur (20) le plus proche peut alors rouler sur ces deux crémaillères aboutées, pour pénétrer à l'intérieur du sas (16') ainsi qu'illustré en figure 8a. Une fois le conteneur à l'intérieur du sas, la crémaillère (162) de sas est ramenée à l'intérieur de l'espace située entre les deux portes. La porte (163) amont ou porte d'entrée est alors refermée et étanchéifiée par gonflage de sont joint (167).

Une fois le sas (16') étanchéifié du côté amont, le joint (168) de la porte (164) aval, ou de sortie, se dégonfle et cette porte s'ouvre par une translation vers le haut. Par une action du vérin (161) associée à des moyens de guidage (non représentés), la crémaillère (162) de sas est alors déplacée en translation jusqu'à assurer une continuité avec la crémaillère (132) annexe de support et de guidage du tunnel (13') de sortie ou de refroidissement. La crémaillère (162) de sas est alors inclinée selon un axe sensiblement horizontal pour soulever sa partie amont et déclencher le roulage du conteneur (20), depuis l'intérieur du sas jusqu'au tunnel (13') de sortie. Une fois le conteneur (20) sorti du sas (16') la porte (164) aval du sas se referme, son joint (167) se regonfle, et le sas est prêt pour recevoir un autre conteneur en provenance du tunnel de thermolyse.

De la même façon, le tunnel (12') de thermolyse reçoit les conteneurs à traiter au travers d'un sas (15') d'entrée fonctionnant selon le même principe.

L'utilisation de tels sas avec portes escamotables et crémaillères mobiles permet en particulier de diminuer la complexité des dispositifs nécessaires pour faire passer les conteneurs entre l'espace extérieur et l'espace chaud et dépressurisé du tunnel de thermolyse, ou entre celui-ci et le tunnel de sortie ou le bassin de déchloruration.

L'utilisation de tunnels ou de chemins de convoyage inclinés, éventuellement assortis de crémaillères mobiles, permet de simplifier les moyens de mobilisation utilisés pour déplacer les conteneurs, et simplifier la structure des conteneurs.

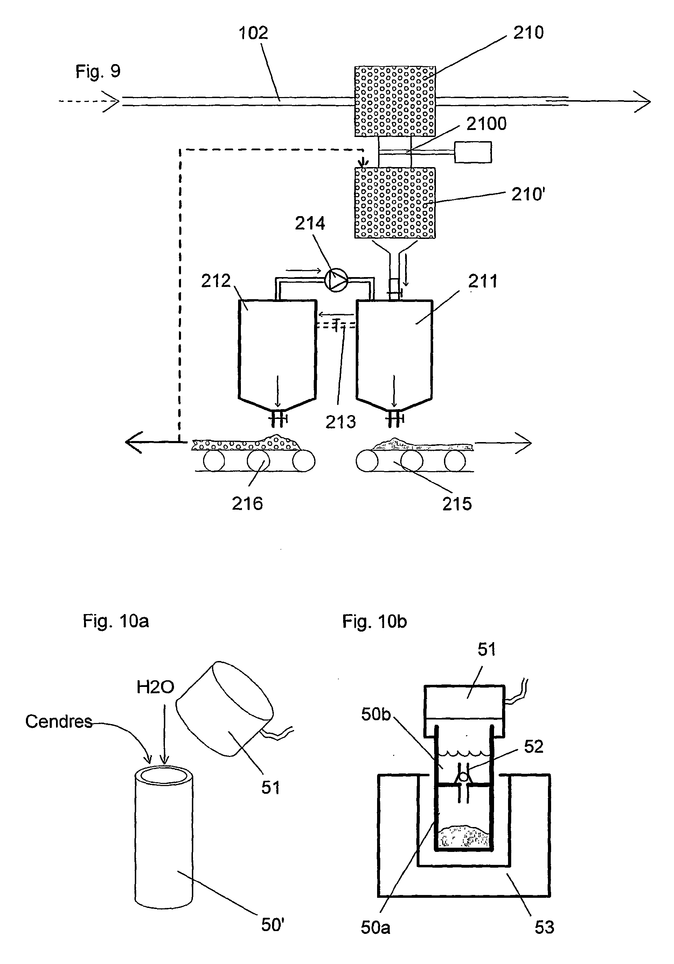

Dans ce mode de réalisation, les gaz de thermolyse issus du tunnel (12) de thermolyse sont filtrés dans au moins un filtre (210) statique utilisant par exemple du charbon actif pour capturer les éléments indésirables qu'ils contiennent. Ainsi que représenté en figure 9, un filtre (210) comprenant des éléments filtrants à base de charbon actif est alors traversé par les gaz issus de la thermolyse des déchets et amenés par un ou plusieurs conduits (102). Ce filtre est monté sur une tourelle (2100) ou un carrousel et peut être remplacé facilement par un autre (210') lorsque ses éléments filtrants sont saturés. Pendant qu'un filtre est en place et épure les gaz de thermolyse, un filtre saturé est vidé de son charbon dans une enceinte (211) d'extraction. Cette enceinte d'extraction est alors emplie d'un fluide de lavage, par exemple un mélange gazeux comprenant du dioxyde de carbone (CO2). Des moyens (214) de pompage viennent alors porter ce fluide de lavage à des conditions de température et de pression suffisante pour qu'au moins une partie se trouve en état supercritique, c'est à dire au-dessus de son « point triple ». Dans le cas du dioxyde de carbone, cet état supercritique est obtenu lorsque la température est supérieure à 31 °C et la pression supérieure à 73 bars.

Dans cet état supercritique, le dioxyde de carbone a la capacité de dissoudre le charbon solide ou pulvérulent provenant du filtrage des gaz de thermolyse. Dans l'enceinte d'extraction subsistent alors des cendres renfermant les éléments initialement contenus dans les gaz de thermolyse et filtrés par le charbon actif.

Une fois le charbon dissous par le dioxyde de carbone, l'enceinte (211) d'extraction est mise en communication avec une enceinte (212) de détente par des moyens de communication, par exemple une valve (213). La pression à l'intérieur de cette enceinte (212) de détente est alors relâchée, ce qui provoque une re-déposition du charbon précédemment dissous. Le dioxyde de carbone est alors réutilisé par les moyens de pompage pour un autre cycle de lavage, et le charbon est évacué par des moyens (216) d'évacuation. Ce charbon est donc débarrassé des polluants qu'il avait accumulés lors du filtrage des gaz de thermolyse, et peut être réutilisé sans danger. il peut être réactivé pour réutilisation dans un cycle de filtrage, ou valorisé sous forme de combustible.

Après évacuation du dioxyde de carbone supercritique de l'enceinte (211) d'extraction vers l'enceinte de détente, les éléments polluants présents dans l'enceinte d'extraction sont évacués par des moyens (215) d'évacuation, par exemple pour être traités par un traitement hydrothermal de la même façon que les cendres et métaux lourds issus des solides carbonés provenant de la thermolyse.

Par ce procédé de lavage du charbon de filtrage des gaz, il est ainsi possible de se débarrasser des gaz de thermolyse ou de les valoriser comme combustible sans qu'ils contiennent d'éléments polluants non traités.

Dans un mode de réalisation représenté en figures 10a et 10b, le procédé hydrothermal de traitement des cendres s'effectue séparément du passage des conteneurs (20) de déchets dans le tunnel (12, 12') de thermolyse. Ce mode de réalisation peut s'appliquer aux cendres issues des solides carbonés restant dans les conteneurs (20) après thermolyse, comme aux cendres provenant du lavage du charbon utilisé pour l'épuration des gaz de thermolyse. Il est bien sûr évident que cette variante du procédé de traitement des cendres peut être tout à fait être combinée avec les autres modes de réalisation décrits ici.

Dans ce mode de réalisation, les cendres à traiter sont enfermées avec un liquide, par exemple de l'eau éventuellement additionnée d'un oxydant, dans un conteneur (50') d'oxydation. Ce conteneur d'oxydation est alors porté à haute pression par des moyens de mise en pression, par exemple une pompe (51) haute pression venant se fixer sur l'ouverture du conteneur. L'intérieur du conteneur d'oxydation est séparé en une première partie, ou partie (50a) chaude, et une deuxième partie, ou partie (50b) froide. Cette première partie (50a), ou partie chaude, reçoit les cendres et est située dans une région du conteneur (50') éloignée de la pompe (51). Cette partie chaude peut être maintenue sous pression une fois la pompe désactivée ou retirée, par exemple par un clapet anti-retour permettant l'entrée de l'eau dans la première partie puis son maintien en pression mais pas sa sortie.

Une fois que le mélange de cendres et d'eau est mis en pression dans la première partie (50a), la pression est relâchée dans la seconde partie (50b). Le conteneur est alors chauffé par des moyens (53) de chauffage, principalement ou uniquement dans sa première partie (50a) contenant les cendres.

Lors de ces opérations, la pression et la température appliquées dans la première partie (50a) du conteneur (50') d'oxydation sont choisies de façon à ce que l'eau se trouve dans un état supercritique. Ces conditions sont choisies en particulier pour que la température soit supérieure à 374°C et la pression supérieure à 250 bars.

A l'état supercritique, l'eau a la capacité d'oxyder les polluants contenus dans les cendres, en particulier les métaux lourds. Après ce traitement, les polluants contenus dans les cendres sont donc à l'état d'oxydes, forme sous laquelle ils existent à l'état naturel.

Du fait de la capacité d'oxydation de l'eau à l'état supercritique, les parois du conteneur et des mécanismes qu'il contient sont également susceptibles d'être rapidement oxydés et détériorés. Le procédé ici décrit a donc l'avantage de confiner cette oxydation à la seule première partie (50a) du conteneur (50') d'oxydation. Pour des raisons de coût ou de maintenance, cette première partie peut par exemple être prévue en tant que revêtement intérieur étanche. De même, les éléments complexes et fragiles comme la pompe haute pression ne seront pas détériorés, puisque l'eau n'atteint pas l'état supercritique dans cette deuxième partie (50b). En effet, la pression dans la deuxième partie (50b) est déjà redescendue sous le seuil du point triple lorsque le conteneur d'oxydation est chauffé. Cette séparation en deux parties de pressions différentes permet ainsi de déterminer précisément la région dans laquelle l'eau atteint son état supercritique.

Ainsi, l'invention propose un procédé de traitement de déchets industriels et/ou ménagers tel que défini dans la revendication 1.

Selon une particularité, le procédé est tel que défini dans les revendications 2 à 14.

L'invention propose également une installation (1) pour le traitement des déchets industriels et/ou ménagers, telle que définie dans la revendication 15.

Selon une particularité, l'installation (1) est telle que définie dans les revendications 16 à 36.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Procédé de traitement de déchets industriels et/ou ménagers, comprenant un chargement des déchets dans une pluralité de conteneurs percés, une thermolyse des déchets dans les conteneurs (20) en convoyage dans un four de thermolyse (12) et un ou plusieurs traitements des produits issus de cette thermolyse, **caractérisé en ce qu'**il comprend :
- une étape d'introduction des conteneurs (20) dans une construction fixe dépourvue de joints dynamiques, formant un tunnel du four de thermolyse (12) ;
- une étape de déplacement des conteneurs percés (20), dans laquelle chacun des conteneurs (20) roule sur lui-même dans le four de thermolyse (12), grâce à au moins une partie (203) de forme déterminée prévue sur les conteneurs qui entraîne ainsi le retournement par gravité du contenu des conteneurs déplacés ; et
- une étape de transfert des gaz de thermolyse lors du roulement des conteneurs (20) dans le four de thermolyse (12), comprenant un passage des gaz via des trous (201) des conteneurs vers des conduits (102, 103) d'évacuation prévus dans le four de thermolyse (12).

2. Procédé selon la revendication 1, **caractérisé en ce qu'**il comprend avant la thermolyse, un séchage des déchets (30) dans les conteneurs (20) en convoyage dans un sécheur (11) chauffé par de la chaleur résiduelle des moyens utilisés pour chauffer le four de thermolyse.

3. Procédé selon la revendication 1 ou 2, **caractérisé en ce qu'**il comprend un recyclage d'une partie des gaz issus de la thermolyse comme combustible, obtenir la chaleur nécessaire à la thermolyse ou pour alimenter au moins un moyen (4) de récupération d'énergie, ou les deux.

4. Procédé selon la revendication 3, **caractérisé en ce que** les gaz de thermolyse sont évacués dans des conduits (102, 103) d'évacuation dont la température est particulièrement contrôlée par chauffage ou refroidissement des conduits, de manière à éviter l'échappement de gaz polluants.

5. Procédé selon la revendication 4, **caractérisé en ce que** cette température dans les conduits (102, 103) d'évacuation est maintenue comprise entre 272°C et 357°C.

6. Procédé selon l'une des revendications 1 à 5, **caractérisé en ce que** les gaz issus de la thermolyse perdent une partie des polluants qu'ils contiennent au contact d'éléments filtrants ou absorbants au charbon actif, disposés sur leur trajet dans le four de thermolyse, ou dans des moyens de filtrage disposés après leur sortie de ce four, ou les deux.

7. Procédé selon l'une des revendications 1 à 6, **caractérisé en ce que** les éléments filtrants comprennent des éléments (21) de motorisation contenant des charbons actifs et assurant le mouvement en rotation des conteneurs (20) à déchets par un système de crémaillère..

8. Procédé selon l'une des revendications 1 à 7, **caractérisé en ce qu'**il comprend après la thermolyse, un lavage des solides carbonés issus de la thermolyse des déchets contenus dans les conteneurs (20), ou des charbons actifs des éléments (21) de motorisation, ou des deux, ce lavage s'effectuant par passage dans un bassin (13) de liquide.

9. Procédé selon l'une des revendications 1 à 8, **caractérisé en ce qu'**un traitement des déchets après la thermolyse comprend les étapes suivantes :
- séparation par gravité, dans un bassin (18) de séparation des solides carbonés d'une part et des métaux, minéraux ou oxydes de métaux d'autre part ;
- pompage des solides carbonés dans le bassin (18) de séparation ;
- filtrage de ces solides carbonés sur un filtre (19) à bande pour emporter l'eau sur des résines (190) échangeuses d'ions.

10. Procédé selon l'une des revendications 6 à 9, **caractérisé en ce qu'**il comporte un traitement des solides carbonés séchés issus de la thermolyse, ou du charbon actif après filtrage des gaz de thermolyse, ou des deux, ce traitement comprenant les étapes suivantes :
- broyage (21) et éventuellement tamisage des solides carbonés ;
- agitation (22) puis flottation (23), dans un bassin (230) de liquide, des solides carbonés broyés, de manière à créer une agglomération en surface des éléments de carbone avec un corps gras d'une part, et au fond du bassin des cendres contenant des métaux lourds d'autre part.

11. Procédé selon l'une des revendications 6 à 10, **caractérisé en ce que** des charbons actifs (210, 210') pollués par le filtrage des gaz de thermolyse, ou des solides carbonés issus de la thermolyse, ou une combinaison de ces éléments, sont traités selon un procédé de séparation par gaz supercritique comprenant les étapes suivantes :
- confinement des éléments à traiter dans une enceinte (211) d'extraction avec un gaz de séparation ;
- mise en pression et température de l'enceinte (211) d'extraction de façon à ce que le gaz de séparation passe à l'état supercritique, entraînant une extraction des charbons présents dans les éléments à traiter et un dépôt sous forme de cendres des polluants qu'ils contiennent ;
- évacuation du gaz de séparation supercritique et du charbon extrait qu'il contient hors de l'enceinte (211) d'extraction ;
- détente du gaz de séparation en dessous des conditions d'état supercritique et dépôt sous forme solide du charbon qu'il contenait.

12. Procédé selon la revendication 11, **caractérisé en ce que** le gaz de séparation utilisé comprend du dioxyde de carbone, l'enceinte (211) d'extraction étant portée à une pression supérieure à 73 bars et à une température supérieure à 31 °C.

13. Procédé selon l'une des revendications 10 à 11, **caractérisé en ce que**, après la flottation (23) ou la séparation (211) par gaz supercritique, le traitement des cendres contenant les polluants ou les métaux lourds comprend un traitement hydrothermal par un liquide à l'état supercritique, apte à oxyder ces métaux ou dégrader ces polluants.

14. Procédé selon la revendication 13, **caractérisé en ce que** le traitement hydrothermal des cendres contenant les polluants ou les métaux lourds comprend les étapes suivantes :
- mélange des cendres à traiter avec de l'eau dans un conteneur d'oxydation (50, 50') ;
- montée en pression au-dessus de 221 bars et mise en température au-dessus de 374°C du contenu de ce conteneur (50, 50') d'oxydation de façon à ce que l'eau passe à l'état supercritique.

15. Installation (1) pour le traitement des déchets industriels et/ou ménagers, comportant :
- un four de thermolyse (12, 12') qui comprend des moyens de convoyage de conteneurs (20) percés contenant des déchets (30) à traiter,
- des moyens de séparation pour séparer les produits formés dans les conteneurs (20) par la thermolyse, et
- des moyens de traitement de ces produits séparés,
**caractérisée en ce que** le four de thermolyse (12) comprend une construction fixe dépourvue de joints dynamiques, formant un tunnel du four de thermolyse (12), et des conduits (102, 103) d'évacuation de gaz de thermolyse à l'extérieure du four (12), les conteneurs (20) comportant au moins une partie (203) présentant une forme permettant à ces conteneurs de rouler sur eux-mêmes dans le four de thermolyse, réalisant ainsi le déplacement des conteneurs et le retournement par gravité de leur contenu, des trous (201) prévus sur les conteneurs (20) permettant le transfert des gaz de thermolyse vers les conduits (102, 103) d'évacuation lors du roulement des conteneurs (20).

16. Installation selon la revendication 15, **caractérisée en ce que** le four de thermolyse comprend un tunnel (12'), maintenu en dépression par des moyens de pompage et par lequel sont convoyés les conteneurs (20) contenant les déchets, ce tunnel comportant à chacune de ses extrémités une portion, dites sas (15') d'entrée et sas (16') de sortie, apte à recevoir au moins un conteneur (20) entre deux portes (163, 164) dotées de moyens d'étanchéité et pouvant ainsi admettre ce conteneur dans le tunnel (12') de thermolyse ou l'en extraire sans mettre en communication directe l'intérieur du tunnel avec l'atmosphère extérieure.

17. Installation selon la revendication 16, **caractérisée en ce qu'**au moins une porte (163, 164) d'au moins un sas (15', 16') du tunnel (12') de thermolyse s'ouvre ou se ferme selon un mouvement de translation transversal à l'axe de ce tunnel, sous l'action d'au moins un actionneur (165, 166), et peut être rendue étanche, une fois fermée, par des joints (167, 168) comprenant au moins une partie gonflable apte à être pressée contre une partie de cette porte.

18. Installation (1) selon l'une des revendications 15 à 17, **caractérisée en ce qu'**un conteneur (20) recevant les déchets est creux et de forme cylindrique de révolution et comprend deux couronnes dentées (203) entourant son axe et situées aux deux extrémités du conteneur (20), et des trous (201) percés sur les sections de base du conteneur (20).

19. Installation (1) selon la revendication 17, **caractérisée en ce que** les moyens de convoyage du four (12, 12') de thermolyse comprennent un système de crémaillères (112, 122, 132) annexes, dites crémaillères de roulage, avec lesquelles viennent collaborer les couronnes dentées (203) d'extrémité des conteneurs (20) pour soutenir et guider les conteneurs (20) en mouvement.

20. Installation selon la revendication 19, **caractérisé en ce qu'**au moins une portion des crémaillères (112, 122, 132) de roulage présente avec le sol une pente d'un angle supérieur à un angle (a12) déterminé, cette pente permettant de faciliter ou de prolonger le roulage des conteneurs dans le tunnel (12') de thermolyse.

21. Installation selon l'une des revendications 19 à 20, **caractérisé en ce que** les crémaillères (112, 122, 132) de roulage comportent au moins une partie (162) mobile en translation selon la direction de roulage, ou en rotation autour d'un axe horizontal et perpendiculaire à la direction de roulage, ou une combinaison de ces mouvements, cette partie mobile étant actionnée par des moyens (161) de mobilisation permettant de déplacer ainsi la partie (162) mobile de façon soit à assurer la continuité du roulage dans une région déterminée, soit à augmenter la pente de la crémaillère et déclencher ou entretenir le mouvement de roulage d'au moins un conteneur, soit les deux.

22. Installation (1) selon la revendication 21, **caractérisée en ce que** les moyens de convoyage comprennent un système de crémaillère comprenant une pluralité d'éléments (21) de motorisation mis en mouvement par des moyens d'actionnement, placés au-dessus des conteneurs (20) en position horizontale et assurant le mouvement en rotation des conteneurs en collaborant avec une première couronne (202) dentée disposée sur la surface extérieure des conteneurs (20) et autour de leur axe.

23. Installation selon l'une des revendications 15 à 22, **caractérisée en ce qu'**elle comporte des moyens de filtrage ou d'absorption des polluants contenus dans les gaz issus de la thermolyse, ces moyens de filtrage ou d'absorption comprenant des éléments au charbon actif, disposés sur le trajet de ces gaz trajet dans le four de thermolyse, ou dans des moyens de filtrage disposés après leur sortie de ce four, ou les deux.

24. Installation (1) selon la revendication 23, **caractérisée en ce que**, dans le four (12) de thermolyse, les moyens de filtrage ou d'absorption comprennent des charbons actifs, contenus dans les éléments (21) de motorisation et s'interposant entre d'une part les conteneurs (20) des déchets (30) et d'autre part des conduits (102, 103) formant les moyens de récupération des gaz de thermolyse.

25. Installation (1) selon l'une des revendications 15 à 24, **caractérisée en ce qu'**elle comprend des moyens de lavage des déchets contenus dans les conteneurs en convoyage ou des charbons actifs ayant filtré les gaz de thermolyse, ces moyens de lavage étant situés en aval du four de thermolyse et constitués d'un bassin (13) de lavage par immersion.

26. Installation (1) selon l'une des revendications 15 à 25, **caractérisée en ce qu'**elle comprend des moyens de récupération des gaz de thermolyse formés par la thermolyse des déchets dans les conteneurs (20) percés, et soit des moyens de combustion d'une partie des gaz de thermolyse pour alimenter en chaleur le four de thermolyse, soit des moyens de récupération d'une partie des gaz de thermolyse, dont la combustion est utilisée par des moyens de combustion pour alimenter un moyen (4) de récupération d'énergie, soit une combinaison de ces éléments.

27. Installation (1) selon l'une des revendications 15 à 26, **caractérisée en ce qu'**elle comprend des moyens de récupération de la chaleur utilisée pour la thermolyse, ces moyens de récupération alimentant un sécheur (11) destiné à sécher les déchets (30) en convoyage dans les conteneurs (20) par les moyens de convoyage, ce sécheur (11) étant situé en amont du four de thermolyse (12) et comprenant d'une part des moyens de récupération de la vapeur d'eau formée par le séchage des déchets et d'autre part des moyens d'évacuation de la chaleur.

28. Installation selon l'une des revendications 15 à 27, **caractérisée en ce que** le bassin (13), le four de thermolyse (12) et le sécheur (11) sont constitués de trois tunnels (11, 12, 13) à coque (110, 120, 130) creuse superposés respectivement dans lesquels sont convoyés les conteneurs (20), l'introduction des conteneurs (20) dans le sécheur (11), le passage des conteneurs du sécheur (11) au four de thermolyse (12) et le passage du four de thermolyse (12) au bassin (13), étant réalisés dans chacune de ces positions par un cylindre (14, 15, 16) positionné verticalement suivant son axe de révolution et comprenant un piston (140) mobile en translation et en rotation dans le cylindre (14, 15, 16) suivant l'axe du cylindre (14, 15, 16), ce piston (140) étant creux et partiellement ouvert sur sa surface en vis-à-vis de la paroi interne du cylindre (14, 15, 16), l'ouverture étant dimensionnée sur le piston (140) de manière à pouvoir recevoir un conteneur (20) de déchets en sortie d'un tunnel (11, 12, 13) ou lors de l'introduction du conteneur (20) dans l'installation (1) et de sorte que la partie pleine de la surface du piston puisse obturer de manière étanche l'entrée ou la sortie des tunnels (11, 12, 12), de façon à pouvoir créer le vide nécessaire à la réaction de thermolyse à l'aide d'une pompe (147) à vide dans le four de thermolyse (12).

29. Installation selon l'une des revendications 25 à 28, **caractérisée en ce que**, après le lavage, les conteneurs sont vidés dans un bassin (18) de séparation pour séparer les produits contenus dans les conteneurs (20) ayant subi la thermolyse, une partie des produits constituant les solides carbonés se retrouvant en surface du bassin (18) et une autre partie constituant des métaux ou minéraux se retrouvant au fond du bassin (18) sur un tapis roulant (180) élevant les minéraux vers l'extérieur du bassin (18) pour les amener ,vers un poste (181) de récupération.

30. Installation selon la revendication 29, **caractérisée en ce qu'**une pompe (182) branchée entre le bassin (18) et un filtre (19), pompe les solides carbonés pour les amener sur le filtre (19) à bande percée de petits trous, un système Venturi créant une dépression à travers les trous du filtre (19) de manière à emporter l'eau chargée en sel des solides carbonés sur des résines (190) échangeuses d'ions.

31. Installation selon l'une des revendications 15 à 30, **caractérisé en ce qu'**elle comprend au moins une enceinte (211) d'extraction apte à recevoir des charbons actifs (210, 210') pollués par le filtrage des gaz de thermolyse, ou des solides carbonés issus de la thermolyse, ou une combinaison de ces éléments, et à être emplie d'un mélange à base de dioxyde de carbone, et comportant des moyens (214) de pompage aptes à amener le dioxyde de carbone dans l'enceinte à son état supercritique de façon à extraire le carbone solide présent dans l'enceinte, puis à évacuer ce dioxyde de carbone supercritique vers une enceinte (212) de détente en laissant dans l'enceinte (211) d'extraction les métaux ou polluants non dissous par le dioxyde de carbone.

32. Installation (1) selon l'une des revendications 15 à 31, **caractérisée en ce que** des deuxièmes conteneurs (50, 50') ou conteneurs d'oxydation sont chargés d'une certaine quantité de cendres contenant des polluants ou des métaux lourds mélangés à un mélange à base d'eau, l'installation comprenant des moyens de mise en pression et en température de ce mélange au-dessus du point triple de l'eau, ou jusqu'à ce que l'eau soit dans un état supercritique, afin d'oxyder les métaux lourds ou de dégrader d'autres polluants contenus dans ces cendres.

33. Installation (1) selon la revendication 32, **caractérisée en ce que** les moyens de mise en pression de l'eau comprennent un disque (500) métallique souple fermant le conteneur (50) d'oxydation et sur lequel vient appuyer une vis (502) de pression vissée dans un couvercle (501) et traversant ce couvercle (501) vissé sur le conteneur (50) pour serrer le disque (500) métallique, le conteneur (50) d'oxydation étant placé à l'intérieur d'un conteneur (20) de déchets pour être introduit dans l'installation (1) comprenant le four de thermolyse (12), afin d'obtenir l'état supercritique de l'eau et la réaction hydrothermale sur les cendres.

34. Installation (1) selon la revendication 32, **caractérisée en ce que** les moyens de mise en pression de l'eau comprennent une pompe haute pression apte à être fixée à une deuxième partie (50b) ou partie froide du conteneur (50') d'oxydation pour mettre en pression l'intérieur de ce conteneur, l'intérieur de ce conteneur comprenant également une première partie (50a), ou partie chaude, apte à être maintenue sous pression, par des moyens (52) de confinement, pendant que la pression est relâchée dans la partie (50b) froide, la partie (50a) chaude pouvant alors être chauffée par des moyens (53) de chauffage pour obtenir les conditions nécessaires au passage de l'eau à l'état supercritique dans ladite partie (50a) chaude.

35. Installation selon l'une des revendications 32 à 34, **caractérisée en ce que** ces conteneurs (50, 50') d'oxydation sont portés à une pression supérieure à 221 bars et à une température supérieure à 375°C.

36. Installation selon l'une des revendications 18 à 35, **caractérisée en ce que** le moyen (4) de récupération de l'énergie comprend un moteur de Stirling modifié par Ericsson.

## Claims

1. Process for treating industrial and/or household waste, comprising loading of the waste into a plurality of pierced containers, thermolysis of the waste in the containers (20) by conveyance into a thermolysis furnace (12) and one or more treatments of the products resulting from this thermolysis, **characterised in that** it comprises:
- a step of introduction of the containers (20) into a fixed construction with no dynamic seals, forming a tunnel of the thermolysis furnace (12);
- a step of displacement of the pierced containers (20) in which each of the containers (20) rolls on itself in the thermolysis furnace (12) by means of at least a part (203) of a given shape provided on the containers that thus effects the turning of the contents of the displaced containers by gravity; and
- a step of transfer of the thermolysis gases during the rolling of the containers (20) in the thermolysis furnace (12) comprising a passage of the gases via holes (201) in the containers towards exhaust ducts (102, 103) provided in the thermolysis furnace (12).

2. Process according to claim 1, **characterised in that** before thermolysis it comprises drying of the waste (30) in the containers (20) by conveyance in a dryer (11) heated by residual heat from the means used to heat the thermolysis furnace.

3. Process according to either claim 1 or claim 2, **characterised in that** it comprises recycling of a portion of the gases resulting from thermolysis as a fuel, to obtain the heat necessary for thermolysis, or to supply at least one energy-recovery means (4), or both.

4. Process according to claim 3, **characterised in that** the thermolysis gases are evacuated into exhaust ducts (102, 103) of which the temperature is particularly controlled by heating or cooling the ducts, so as to prevent the escape of polluting gases.

5. Process according to claim 4, **characterised in that** this temperature in the exhaust ducts (102, 103) is maintained at between 272 °C and 357 °C.

6. Process according to any one of clams 1 to 5, **characterised in that** the gases resulting from thermolysis lose a portion of the pollutants that they contain upon contact with filtering elements or absorbent elements containing activated carbon, positioned along their path in the thermolysis furnace, or in the filtering means positioned after the gases leave this furnace, or both.

7. Process according to any one of claims 1 to 6, **characterised in that** the filtering elements comprise motorisation elements (21) that contain activated carbon and perform the rotation of the waste containers (20) via a rack system.

8. Process according to any one of claims 1 to 7, **characterised in that** after thermolysis it comprises washing of the carbon-containing solids resulting from thermolysis of the waste contained in the containers (20), or of the activated carbon in the motorisation elements (21), or both, this washing being carried out by passage in a liquid tank (13).

9. Process according to any one of claims 1 to 8, further **characterised in that** a treatment of waste after thermolysis comprises the following steps:
- separation by gravity in a separation tank (18) of carbon-containing solids on the one hand and of metals, minerals or metal oxides on the other hand;
- pumping of the carbon-containing solids in the separation tank (18);
- filtering of the carbon-containing solids on a band filter (19) to remove the water on ion-exchange resins (190).

10. Process according to any one of claims 6 to 9, **characterised in that** it comprises a treatment of the dried carbon-containing solids resulting from thermolysis, or of the activated carbon after filtering of the thermolysis gases, or both, this treatment comprising the following steps:
- crushing (21) and possible sieving of the carbon-containing solids;
- stirring (22) then flotation (23) in a liquid tank (230) of the crushed carbon-containing solids so as to create a surface agglomeration of the carbon elements with a fatty element on the one hand and, at the bottom of the tank, ashes containing heavy metals on the other hand.

11. Process according to any one of claims 6 to 10, **characterised in that** activated carbon (210, 210') polluted by filtering of the thermolysis gases, or carbon-containing solids resulting from thermolysis, or a combination of these elements are treated by a method of separation by supercritical gas comprising the following steps:
- confinement of the elements to be treated in an extraction chamber (211) containing a separation gas;
- bringing to temperature and pressure of the extraction chamber (211) in such a way that the separation gas enters the supercritical state, bringing about extraction of the carbon present in the elements to be treated and deposition in the form of ashes of the pollutants that it contains;
- exhausting of the supercritical separation gas and the extracted carbon that it contains to outside the extraction chamber (211);
- expansion of the separation gas at conditions below those for the supercritical state and deposition in solid form of the carbon that it contains.

12. Process according to claim 11, **characterised in that** the separation gas used comprises carbon dioxide, the extraction chamber (211) being brought to a pressure greater than 73 bars and a temperature higher than 31 °C.

13. Process according to either claim 10 or claim 11, **characterised in that** after flotation (23) or separation (211) by supercritical gas, the treatment of the ashes containing the pollutants or the heavy metals comprises a hydrothermal treatment by a liquid in the supercritical state able to oxidise these metals or degrade these pollutants.

14. Process according to claim 13, **characterised in that** the hydrothermal treatment of the ashes containing the pollutants or the heavy metals comprises the following steps:
- mixing of the ashes to be treated with water in an oxidation container (50, 50');
- raising the contents of this oxidation container (50, 50') to a pressure above 221 bars and a temperature above 374 °C in such a way that the water enters the supercritical state.

15. Installation (1) for the treatment of industrial and/or household waste, comprising:
- a thermolysis furnace (12, 12') which comprises a conveyance means for pierced containers (20) containing waste (30) to be treated,
- separation means for separating the products formed in the containers (20) by thermolysis, and
- treatment means for treating these separated products,
**characterised in that** the thermolysis furnace (12) comprises a fixed construction with no dynamic seals, forming a tunnel of the thermolysis furnace (12), and exhaust ducts (102, 103) for exhausting thermolysis gas to the outside of the furnace (12), the containers (20) comprising at least a part (203) which is shaped so as to allow these containers to roll on themselves in the thermolysis furnace, thus achieving the displacement of the containers and the turning by gravity of their contents, the holes (201) provided in the containers (20) permitting the transfer of the thermolysis gases towards the exhaust ducts (102, 103) during the rolling of the containers (20).

16. Installation according to claim 15, **characterised in that** the thermolysis furnace comprises a tunnel (12'), maintained at a reduced pressure by pumping means and by which the containers (20) containing the waste are conveyed, this tunnel comprising at each of its ends a portion called the inlet lock (15') and the outlet lock (16'), able to receive at least one container (20) between two doors (163, 164) endowed with a sealing means and thus able to admit this container into the thermolysis tunnel (12') or to extract it from therein without directly exposing the inside of the tunnel to the outside atmosphere.

17. Installation according to claim 16, **characterised in that** at least one door (163, 164) of at least one lock (15', 16') of the thermolysis tunnel (12') opens or closes by a translation movement transversely to the axis of this tunnel, under the effect of at least one actuator (165, 166), and can be sealed tight, once closed, by seals (167, 168) comprising at least one inflatable part able to be pressed against a part of this door.

18. Installation (1) according to any one of claims 15 to 17, **characterised in that** a container (20) receiving the waste is hollow, has a cylindrical shape, is generated by revolution and comprises two ring crowns (203) surrounding its axis and located at the two ends of the container (20), and holes (201) pierced in the sections of the base of the container (20).

19. Installation (1) according to claim 17, **characterised in that** the conveyance means for the thermolysis furnace (12, 12') comprise a system of attached racks (112, 122, 132) called rolling racks with which the ring gears (203) at the end of the containers (20) cooperate to hold and guide the containers (20) during movement thereof.

20. Installation according to claim 19, **characterised in that** at least one portion of the rolling racks (112, 122, 132) has a slope with regard to the ground of an angle greater than a given angle (a12), this slope permitting facilitation or prolongation of the rolling of the containers in the thermolysis tunnel (12').

21. Installation according to any one of claims 19 to 20, **characterised in that** the rolling racks (112, 122, 132) comprise at least a part (162) that moves by translation in the direction of rolling, or by rotation around a horizontal axis perpendicular to the direction of rolling, or a combination of these movements, this moving part being actuated by mobilisation means (161) thus permitting displacement of the moving part (162) in such a way as to either assure the continuity of rolling in a given region, or increase the slope of the rack and trigger or maintain the rolling movement of at least one container, or both.

22. Installation (1) according to claim 21, **characterised in that** the conveyance means comprise a rack system comprising a plurality of motorisation elements (21) moved by actuation means, placed above the containers (20) in a horizontal position and performing the movement by rotation of the containers by cooperating with a first ring gear (202) positioned on the outer surface of the containers (20) around their axis.

23. Installation according to any one of claims 15 to 22, **characterised in that** it comprises filtering or absorption means for the pollutants contained in the gases resulting from thermolysis, these filtering or absorption means comprising elements containing activated carbon, positioned along the path of these gases in the thermolysis furnace, or in filtering means positioned after the gases leave this furnace, or both.

24. Installation (1) according to claim 23, **characterised in that**, in the thermolysis furnace (12), the filtering or absorption means comprise activated carbon, which is contained in the motorisation elements (21) and interposed between the containers (20) for waste (30), on the one hand, and ducts (102, 103) forming recovery means for the thermolysis gases on the other hand.

25. Installation (1) according to any one of claims 15 to 24, **characterised in that** it comprises means for washing the waste contained in the containers being conveyed or for washing the activated carbon which filtered the thermolysis gases, these washing means being located downstream of the thermolysis furnace and made up of a tank (13) for washing by immersion.

26. Installation (1) according to any one of claims 15 to 25, **characterised in that** it comprises means for recovery of the thermolysis gases formed by thermolysis of the waste in the pierced containers (20), and either means for combustion of a portion of the thermolysis gases to supply the thermolysis furnace with heat, or means for recovery of a portion of the thermolysis gases, whose combustion is used by combustion means to supply an energy recovery means (4), or a combination of these elements.

27. Installation (1) according to any one of claims 15 to 26, **characterised in that** it comprises means for recovery of the heat used for thermolysis, these recovery means supplying a dryer (11) for drying the waste (30) conveyed in the containers (20) by the conveyance means, this dryer (11) being located upstream of the thermolysis furnace (12) and comprising means for recovery of the water vapour formed by drying of the waste on the one hand, and means for exhaust of the heat on the other hand.

28. Installation according to any one of claims 15 to 27, **characterised in that** the tank (13), the thermolysis furnace (12) and the dryer (11) are made up of three respectively superimposed tunnels (11, 12, 13) with hollow shells (110, 120, 130) into which the containers (20) are conveyed, the introduction of the containers (20) into the dryer (11), the passage of the containers from the dryer (11) to the thermolysis furnace (12) and the passage from the thermolysis furnace (12) to the tank (13) being carried out in each of these positions by a cylinder (14, 15, 16) positioned vertically along its axis of rotation and comprising a piston (140) that moves by translation and by rotation in the cylinder (14, 15, 16) along the axis of the cylinder (14, 15, 16), this piston (140) being hollow and partially open on its surface facing the inner wall of the cylinder (14, 15, 16), the opening of the piston (140) having dimensions so as to be able to receive a waste container (20) at the outlet of a tunnel (11, 12, 13) or during the introduction of the container (20) into the installation and so that the solid part of the piston surface can tightly block the inlet or outlet of the tunnels (11, 12, 12), so as to be able to create the vacuum necessary for the thermolysis reaction with the aid of a vacuum pump (147) in the thermolysis furnace (12).

29. Installation according to any one of claims 25 to 28, **characterised in that** after washing, the containers are emptied into a separation tank (18) to separate the products contained in the containers (20) having undergone thermolysis, a part of the products constituting carbon-containing solids being found on the surface of the tank (18) and another part constituting metals or minerals being found at the bottom of the tank (18) on a conveyer belt (180) lifting the minerals toward the outside of the tank (18) to bring them towards a recovery station (181).

30. Installation according to claim 29, **characterised in that** a pump (182), connected between the tank (18) and a filter (19), pumps the carbon-containing solids to introduce them into a band filter (19) pierced with small holes, a Venturi system creating a reduced pressure through the filter holes (19), so as to bring the water filled with salt of the carbon-containing solids onto ion-exchange resins (190).

31. Installation according to any one of claims 15 to 30, **characterised in that** it comprises at least one extraction chamber (211) able to receive activated carbon (210, 210') polluted by the filtering of thermolysis gases, or carbon-containing solids resulting from thermolysis, or a combination of these elements, and able to be filled with a mixture based on carbon dioxide, and having pumping means (214) able to bring the carbon dioxide in the chamber to its supercritical state, so as to be able to extract the solid carbon present in the chamber, then to discharge this supercritical carbon dioxide towards an expansion chamber (212) leaving metals or pollutants not dissolved by the carbon dioxide in the extraction chamber (211).

32. Installation (1) according to any one of claims 15 to 31, **characterised in that** second containers (50, 50') or oxidation containers are loaded with a specific quantity of ashes containing pollutants or heavy metals mixed with a water-based mixture, the installation comprising means for bringing the pressure and temperature of this mixture above the triple point of water, or to the point where the water is in a supercritical state, in order to oxidise the heavy metals or degrade other pollutants contained in these ashes.

33. Installation (1) according to claim 32, **characterised in that** the water-pressurising means comprise a flexible metal disc (500) closing the oxidation container (50) and on which rests a pressure screw (502) screwed into a cover (501) and passing through this cover (501) screwed onto the container (50) to clamp the metal disc (500), the oxidation container (50) being placed inside a waste container (20), so as to be introduced into the installation (1) comprising the thermolysis furnace (12), in order to obtain the supercritical state of the water and the hydrothermal reaction on the ashes.

34. Installation (1) according to claim 32, **characterised in that** the water pressurising means comprise a high-pressure pump that can be attached to a second part (50b) or a cold part of the oxidation container (50') to pressurise the inside of this container which also comprises a first part (50a) or hot part, which can be kept under pressure by confinement means (52), the hot part (50a) being able to be heated by heating means (53) while the pressure is relaxed in the cold part (50b), to obtain the conditions necessary for passage of the water to the supercritical state in said hot part (50a).

35. Installation according to any one of claims 32 to 34, **characterised in that** these oxidation containers (50, 50') are brought to a pressure greater than 221 bars and a temperature higher than 375 °C.

36. Installation according any one of claims 18 to 35, **characterised in that** the energy recovery means (4) comprises an Ericsson-modified Stirling engine.

## Patentansprüche

1. Verfahren zur Aufbereitung von Industrie- und/oder Haushaltsabfällen, das Laden der Abfälle in mehrere durchbrochene Behälter umfassend, eine Thermolyse der Abfälle in den Behältern (20), die in einem Thermolyseofen (12) gefördert werden, und einen oder mehrere Aufbereitungsschritte der Produkte, die aus dieser Thermolyse hervorgegangen sind, **dadurch gekennzeichnet, dass** es umfasst:
- einen Schritt des Einführens der Behälter (20) in eine feststehende Konstruktion ohne dynamische Dichtungen, die einen Tunnel eines Thermolysrofens (12) darstellt,
- einen Schritt des Fortbewegens der durchbrochenen Behälter (20), in dem jeder der Behälter aufgrund mindestens eines Teils (203) festgelegter Form, das an den Behältern vorgesehen ist, im Thermolyseofen (12) um sich selbst rollt, ein Teil, das so das Umwälzen des Inhalts der vorwärts bewegten Behälter durch die Schwerkraft bewirkt, und
- einen Schritt der Abgabe der Thermolysegase beim Rollen der Behälter (20) im Thermolyseofen (12), einen Durchtritt der Gase durch Löcher (201) der Behälter in Abführleitungen (102, 103), die im Thermolyseofen (12) vorgesehen sind.

2. Verfahren nach Patentanspruch 1, **dadurch gekennzeichnet, dass** es vor der Thermolyse eine Trocknung der Abfälle (30) in den Behältern (20) während der Förderung in einem Trockner (11) umfasst, der durch Abwärme der Mittel geheizt wird, die zum Heizen des Thermolyseofens verwendet werden.

3. Verfahren nach Patentanspruch 1 oder 2, **dadurch gekennzeichnet, dass** es eine Wiederverwendung eines Teils der aus der Thermolyse hervorgehenden Gase als Brennmaterial umfasst, um die für die Thermolyse erforderliche Wärme zu erhalten oder um mindestens ein Energiegewinnungsmittel (4) zu versorgen oder beides.

4. Verfahren nach Patentanspruch 3, **dadurch gekennzeichnet, dass** die Thermolysegase in Abführleitungen (102, 103) abgeführt werden, deren Temperatur durch Heizen oder Kühlen der Leitungen besonders reguliert wird, um das Austreten umweltverschmutzender Gase zu vermeiden.

5. Verfahren nach Patentanspruch 4, **dadurch gekennzeichnet, dass** diese Temperatur in den Abführleitungen (102, 103) zwischen 272°C und 357°C gehalten wird.

6. Verfahren nach einem der Patentansprüche 1 bis 5, **dadurch gekennzeichnet, dass** die aus der Thermolyse hervorgehenden Gase einen Teil ihrer umweltverschmutzenden Anteile bei Berührung mit filtrierenden oder absorbierenden Elementen auf Aktivkohlebasis verlieren, die auf ihrem Weg im Thermolyseofen angeordnet sind, oder in Filtermitteln, die nach ihrem Austritt aus diesem Ofen angeordnet sind, oder beides.

7. Verfahren nach einem der Patentansprüche 1 bis 6, **dadurch gekennzeichnet, dass** die filtrierenden Elemente Antriebselemente (21) umfassen, die Aktivkohle enthalten und die Rotationsbewegung der Abfallbehälter (20) durch ein Zahnstangensystem sicherstellen.

8. Verfahren nach einem der Patentansprüche 1 bis 7, **dadurch gekennzeichnet, dass** es nach der Thermolyse ein Waschen der karbonisierten Feststoffe umfasst, die aus der Thermolyse der in den Behältern (20) enthaltenen Abfälle hervorgehen, oder der Aktivkohle der Antriebselemente (21) oder beider, wobei dieses Waschen durch Durchqueren eines Flüssigkeitsbades (13) erfolgt.

9. Verfahren nach einem der Patentansprüche 1 bis 8, **dadurch gekennzeichnet, dass** eine Aufbereitung der Abfälle nach der Thermolyse die folgenden Schritte umfasst:
- Schwerkrafttrennung der karbonisierten Feststoffe einerseits und der Metalle, Mineralien oder Metalloxide andererseits in einem Trennbecken (18),
- Abpumpen der karbonisierten Feststoffe im Trennbecken (18),
- Abfiltrieren dieser karbonisierten Feststoffe durch einen Bandfilter (19) zum Leiten des Wassers auf lonenaustauscherharze (190).

10. Verfahren nach einem der Patentansprüche 6 bis 9, **dadurch gekennzeichnet, dass** es eine Aufbereitung der getrockneten, aus der Thermolyse hervorgegangenen, karbonisierten Feststoffe umfasst, oder der Aktivkohle nach dem Filtrieren der Thermolysegase, oder beider, wobei diese Aufbereitung die folgenden Schritte umfasst:
- Mahlen (21) und gegebenenfalls Sieben der karbonisierten Feststoffe,
- Umrühren (22), und dann Flotation (23) der gemahlenen karbonisierten Feststoffe in einem Flüssigkeitsbecken (230) um einerseits an der Oberfläche eine Verdichtung der Kohlenstoffteile mit einem Fett zu erzeugen und andererseits am Boden des Beckens Aschen, die Schwermetalle enthalten.

11. Verfahren nach einem der Patentansprüche 6 bis 10, **dadurch gekennzeichnet, dass** durch Filtrieren der Thermolysegase verschmutzte Aktivkohle (210, 210') oder aus der Thermolyse hervorgegangene karbonisierte Feststoffe oder eine Kombination aus diesen Substanzen nach einem Trennungsverfahren durch überkritisches Gas behandelt werden, das die folgenden Schritte umfasst:
- Einschließen der zu behandelnden Substanzen in einer Extraktionskammer (211) mit einem Trenngas,
- Bringen der Kammer (211) auf Extraktionsdruck und -temperatur, so dass das Trenngas in den überkritischen Zustand übergeht, was zu einer Extraktion der in den zu behandlenden Substanzen vorhandenen Kohle führt und einem Niederschlag der Verschmutzenden Stoffe, die sie enthalten, in Form von Asche,
- Abführen des überkritischen Trenngases und der extrahierten Kohle aus der Extraktionskammer (211), die sie enthält,
- Entspannen des Trenngases auf unterhalb der Bedingungen des überkritischen Zustandes und Ablagerung der Kohle, die sie enthält, in fester Form.

12. Verfahren nach Patentanspruch 11, **dadurch gekennzeichnet, dass** das verwendete Trenngas Kohlendioxid enthält, wobei die Extraktionskammer (211) auf einen Druck von mehr als 73 Bar und eine Temperatur von mehr als 31°C gebracht wird.

13. Verfahren nach einem der Patentansprüche 10 bis 11, **dadurch gekennzeichnet, dass** die Aufbereitung der die verschmutzenden Stoffe oder die Schwermetalle enthaltenden Aschen nach der Flotation (23) oder der Trennung (211) durch überkritisches Gas eine hydrothermale Behandlung mit einer Flüssigkeit im überkritischen Zustand umfasst, die in der Lage ist, diese Metalle zu oxidieren oder diese verschmutzenden Stoffe abzubauen.

14. Verfahren nach Patentanspruch 13, **dadurch gekennzeichnet, dass** die hydrothermale Behandlung der die verschmutzenden Stoffe oder die Schwermetalle enthaltenden Aschen die folgenden Schritte umfasst:
- Mischung der zu behandelnden Aschen mit Wasser in einem Oxidationsbehälter (50, 50'),
- Druckerhöhung auf über 221 Bar und Temperaturregulierung auf über 374°C des Inhalts dieses Oxidationsbehälters (50, 50'), damit das Wasser in den überkritischen Zustand übergeht.

15. Anlage (1) für die Aufbereitung von Industrie- und/oder Haushaltsabfällen, umfassend:
- einen Thermolyseofen (12, 12'), der Mittel zur Förderung von durchbrochenen Behältern (20) enthält, die aufzubereitende Abfälle (30) enthalten,
- Trennmittel zum Trennen der durch die Thermolyse in den Behältern (20) erzeugten Produkte, und
- Mittel zur Behandlung dieser getrennten Produkte,
**dadurch gekennzeichnet, dass** der Thermolyseofen (12) eine feststehende Konstruktion ohne dynamische Dichtungen umfasst, die den Tunnel des Thermolyseofens (12) bildet, und Leitungen (102, 103) zur Abführung von Thermolysegasen aus dem Ofen (12), Behälter (20), die mindestens ein Teil (203) aufweisen, das eine Form aufweist, die diesen Behältern erlaubt, im Thermolyseofen um sich selbst zu rollen, wodurch die Fortbewegung der Behälter und die Schwerkraftumwälzung ihres Inhaltes erfolgt, wobei Löcher (201), die in den Behältern (20) vorgesehen sind, wahrend des Rollens der Behälter (20) den Durchtritt der Thermolysegase zu den Abführleitungen (102, 103) ermöglichen.

16. Anlage nach Patentanspruch 15, **dadurch gekennzeichnet, dass** der Thermolyseofen einen Tunnel (12') umfasst, der durch Pumpmittel auf Unterdruck gehalten wird und durch den die die Abfälle enthaltenden Behälter (20) gefördert werden, wobei dieser Tunnel an jedem seiner Enden einen Abschnitt aufweist, Eintrittsschleuse (15') und Austrittsschleuse (16') genannt, die geeignet sind, mindestens einen Behälter (20) zwischen zwei Türen (163, 164) aufzunehmen, die mit Dichtungsmitteln versehen sind, und so diesen Behälter in den Thermolysetunnel (12') eintreten zu lassen oder ihn daraus zu entnehmen erlauben, ohne das Innere des Tunnels mit der Außenatmosphäre direkt in Verbindung zu bringen.

17. Anlage nach Patentanspruch 16, **dadurch gekennzeichnet, dass** mindestens eine Tür (163, 164) mindestens einer Schleuse (15', 16') des Thermolysetunnels (12') sich durch Betätigung mindestens eines Betätigungsmittels (165, 166) in einer Verschiebungsbewegung quer zur Achse dieses Tunnels öffnet oder schließt und, wenn sie geschlossen ist, durch Dichtungen (167, 168) abgedichtet werden kann, die mindestens einen aufblasbaren Teil umfassen, der geeignet ist, an einen Teil dieser Tür gedrückt zu werden.

18. Anlage (1) nach einem der Patentansprüche 15 bis 17, **dadurch gekennzeichnet, dass** ein Behälter (20), der die Abfälle aufnimmt, hohl ist und die Form eines Rotationszylinders hat und zwei Zahnkronen (203) aufweist, die seine Achse umgeben und sich an den beiden Enden des Behälters (20) befinden, und Löcher (201), die in den Basisabschnitten des Behälters (20) ausgebildet sind.

19. Anlage (1) nach Patentanspruch 17, **dadurch gekennzeichnet, dass** die Fördermittel des Thermolyseofens (12, 12') ein zusätzliches Zahnstangensystem (112, 122, 132), Rollzahnstangen genannt, umfassen, mit denen die Zahnkronen (203) an den Enden der Behälter (20) zusammenarbeiten, um die Behälter (20) zu tragen und zu führen.

20. Anlage nach Patentanspruch 19, **dadurch gekennzeichnet, dass** mindestens ein Teil der Rollzahnstangen (112, 122, 132) mit dem Boden eine Neigung mit einem Winkel aufweist, der größer ist, als ein bestimmter Winkel (a12), wobei diese Neigung es erlaubt, das Rollen der Behälter im Thermolysetunnel (12') zu erleichtern oder zu verlängern.

21. Anlage nach einem der Patentansprüche 19 bis 20, **dadurch gekennzeichnet, dass** die Rollzahnstangen (112, 122, 132) mindestens einen in der Rollrichtung in Translation oder in Rotation um eine horizontale und zur Rollrichtung rechtwinklige Achse oder eine Kombination dieser Bewegungen beweglichen Teil (162) aufweist, wobei dieser bewegliche Teil durch Bewegungsmittel (161) betätigt wird, die erlauben, auf diese Weise den beweglichen Teil (162) derart zu bewegen, dass entweder die Fortführung des Rollens in einem bestimmten Bereich sichergestellt wird, oder die Neigung der Zahnstange zu erhöhen und die Rollbewegung mindestens eines Behälters auszulösen oder aufrechtzuerhalten, ober beides.

22. Anlage (1) nach Patentanspruch 21, **dadurch gekennzeichnet, dass** die Fördermittel ein Zahnstangensystem umfassen, das mehrere Antriebselemente (21) umfasst, die durch Betätigungsmittel in Bewegung gebracht werden, die oberhalb der Behälter (20) in horizontaler Stellung angeordnet sind und die Rotationsbewegung der Behälter in Zusammenarbeit mit einer ersten Zahnkrone (202) sicherstellt, die an der Außenfläche der Behälter (20) und um ihre Achse angeordnet ist.

23. Anlage nach einem der Patentansprüche 15 bis 22, **dadurch gekennzeichnet, dass** sie Mittel zum Filtrieren oder zur Absorption der verschmutzenden Stoffe umfasst, die in den aus der Thermolyse hervorgehenden Gasen enthalten sind, wobei diese Mittel zum Filtrieren oder zur Absorption Elemente aus Aktivkohle umfassen, die auf dem Weg dieser Gase im Thermolyseofen angeordnet sind oder in Filtermitteln, die nach deren Austritt aus diesem Ofen angeordnet sind, oder beides.

24. Anlage (1) nach Patentanspruch 23, **dadurch gekennzeichnet, dass** die Mittel zum Filtrieren oder zur Absorption im Thermolyseofen (12) Elemente aus Aktivkohle umfassen, die in den Antriebselementen (21) enthalten sind und sich zwischen einerseits den Behältern (20) der Abfälle (30) und andererseits den Leitungen (102, 103) einfügen, die die Mittel zum Sammeln der Thermolysegase bilden.

25. Anlage (1) nach einem der Patentansprüche 15 bis 24, **dadurch gekennzeichnet, dass** sie Mittel zum Waschen der in den geförderten Behältern enthaltenen Abfälle oder der Aktivkohle, die die Thermolysegase filtriert haben, umfasst, wobei diese Waschmittel nach dem Thermolyseofen angeordnet sind und aus einem Becken (13) zum Waschen durch Eintauchen bestehen.

26. Anlage (1) nach einem der Patentansprüche 15 bis 25, **dadurch gekennzeichnet, dass** sie Mittel zur Rückgewinnung der bei der Thermolyse der Abfälle in den durchbrochenen Behältern (20) gebildeten Thermolysegase umfasst, und entweder Mittel zur Verbrennung eines Teils der Thermolysegase zur Versorgung des Thermolyseofens mit Wärme, oder Mittel zur Sammlung eines Teils der Thermolysegase, deren Verbrennung von Verbrennungsmitteln dazu verwendet wird, ein Mittel (4) zur Energiegewinnung zu versorgen, oder eine Kombination dieser Teile.

27. Anlage (1) nach einem der Patentansprüche 15 bis 26, **dadurch gekennzeichnet, dass** sie Mittel zur Rückgewinnung der Wärme umfasst, die zur Thermolyse verwendet wird, wobei diese Rückgewinnungsmittel einen Trockner (11) versorgen, der dazu bestimmt ist, die Abfälle (30), die durch die Fördermittel in den Behältern (20) gefördert werden, zu trocknen, wobei dieser Trockner (11) vor dem Thermolyseofen (12) angeordnet ist und einerseits Mittel zum Auffangen des beim Trocknen der Abfälle gebildeten Wasserdampfes umfasst und andererseits Mittel zum Abführen der Wärme.

28. Anlage nach einem der Patentansprüche 15 bis 27, **dadurch gekennzeichnet, dass** das Becken (13), der Thermolyseofen (12) und der Trockner (11) aus drei übereinander angeordneten Tunneln (11, 12, 13) mit Hohlschale (110, 120, 130) bestehen, in denen jeweils die Behälter (20) gefördert werden, wobei das Einführen der Behälter (20) in den Trockner (11), der Übergang der Behälter vom Trockner (11) in den Thermolyseofen (12) und der Übergang vom Thermolyseofen (12) zum Becken (13) an jeder dieser Stellen durch einen Zylinder (14, 15, 16) erfolgt, dessen Rotationsachse senkrecht steht, und der einen Kolben (140) umfasst, der im Zylinder (14, 15, 16) in Richtung der Achse des Zylinders (14, 15, 16) verschiebungs- und drehbeweglich ist, wobei dieser Kolben (140) hohl und an seiner Oberfläche gegenüber der Innenwand des Zylinders (14, 15, 16) teilweise offen ist, wobei die Öffnung gegenüber dem Kolben (140) derart bemessen ist, dass sie am Ausgang eines Tunnels (11, 12, 13) oder beim Einführen des Behälters (20) in die Anlage (1) einen Abfallbehälter (20) aufnehmen kann und derart, dass der ausgefüllte Teil der Oberfläche des Kolbens den Eingang oder den Ausgang des Tunnels (11, 12, 13) abdichtend verschließen kann, um mit Hilfe einer Vakuumpumpe (147) das für die Thermolysereaktion erforderliche Vakuum im Thermolyseofen (12) schaffen zu können.

29. Anlage nach einem der Patentansprüche 25 bis 28, **dadurch gekennzeichnet, dass** die Behälter nach dem Waschen in ein Trennbecken (18) geleert werden, um die Produkte zu trennen, die sich in den Behältern (20) befinden, die der Thermolyse unterworfen wurden, wobei ein Teil der Produkte die karbonisierten Feststoffe darstellen, die sich an der Oberfläche des Beckens (18) sammeln, und ein anderer Teil Metalle oder Mineralien, die sich am Boden des Beckens (18) auf einem Förderband (180) sammeln, das die Mineralien aus dem Becken (18) heraushebt, um sie zu einem Rückgewinnungsposten (181) zu bringen.

30. Anlage nach Patentanspruch 29, **dadurch gekennzeichnet, dass** eine Pumpe (182), die zwischen dem Becken (18) und einem Filter (19) angeschlossen ist, die karbonisierten Feststoffe pumpt, um sie auf den mit kleinen Löchern durchbrochenen Bandfilter (19) zu bringen, wobei ein Venturisystem einen Unterdruck durch die Löcher des Filters (19) erzeugt, um das Wasser, in dem Salze der karbonisierten Feststoffe gelöst sind, auf lonenaustauscherharze (190) zu leiten.

31. Anlage nach einem der Patentansprüche 15 bis 30, **dadurch gekennzeichnet, dass** sie mindestens eine Extraktionskammer (211) umfasst, die geeignet ist, durch das Filtrieren der Thermolysegase verschmutzte Aktivkohle (210, 210') aufzunehmen oder aus der Thermolyse hervorgegangene karbonisierte Feststoffe oder eine Kombination dieser Substanzen, und mit einem Gemisch auf der Basis von Kohlendioxid gefüllt zu werden, und Pumpmittel (214) umfassend, die geeignet sind, das Kohlendioxid in der Kammer in seinen überkritischen Zustand zu versetzen, um den festen Kohlenstoff, der sich in der Kammer befindet, zu extrahieren, und dann dieses überkritische Kohlendioxid in eine Entspannungskammer (212) zu leeren und dabei in der Extraktionskammer (211) die Metalle oder vom Kohlendioxid nicht gelösten verschmutzenden Stoffe zu lassen.

32. Anlage (1) nach einem der Patentansprüche 15 bis 31, **dadurch gekennzeichnet, dass** zweite Behälter (50, 50') oder Oxidationsbehälter mit einer bestimmten Menge Asche geladen werden, die verschmutzende Stoffe oder Schwermetalle, gemischt mit einem wässrigen Gemisch, enthalten, wobei die Anlage Mittel zum Einstellen von Druck und Temperatur dieses Gemisches auf oberhalb des Tripelpunktes des Wassers umfasst oder bis dahin, dass sich das Wasser in einem überkritischen Zustand befindet, um die Schwermetalle zu oxidieren oder andere verschmutzende Stoffe abzubauen, die in dieser Asche enthalten sind.

33. Anlage (1) nach Patentanspruch 32, **dadurch gekennzeichnet, dass** die Mittel zur Einstellung des Wasserdruckes eine nachgiebige Metallscheibe (500) umfassen, die den Oxidationsbehälter (50) schließt und auf die eine Druckschraube (502) drückt, die in einen Deckel (501) geschraubt ist und diesen Deckel (501) durchquert, der auf den Behälter (50) geschraubt ist, um die Metallscheibe (500) anzuziehen, wobei der Oxidationsbehälter (50) im Inneren eines Abfallbehälters (20) angeordnet ist, um in die Anlage (1) eingeführt zu werden, die den Thermolyseofen (12) umfasst, um den überkritischen Zustand des Wassers zu erzeugen und die hydrothermale Reaktion an der Asche auszuführen.

34. Anlage (1) nach Patentanspruch 32, **dadurch gekennzeichnet, dass** die Mittel zur Einstellung des Wasserdruckes eine Hochdruckpumpe umfassen, die dazu geeignet ist, an einem zweiten Teil (50b) oder kalten Teil des Oxidationsbehälters (50') befestigt zu werden, um das Innere dieses Behälters unter Druck zu setzen, wobei das Innere dieses Behälters ebenfalls einen ersten Teil (50a) oder heißen Teil umfasst, der geeignet ist, durch Einschlussmittel (52) unter Druck gehalten zu werden, während der Druck im kalten Teil (50b) verringert wird, während der heiße Teil (50a) dann durch Heizmittel (53) erhitzt werden kann, um die Bedingungen herzustellen, die für den Übergang des Wassers in den überkritischen Zustand im genannten heißen Teil (50a) erforderlich ist.

35. Anlage nach einem der Patentansprüche 32 bis 34, **dadurch gekennzeichnet, dass** diese Oxidationsbehälter (50, 50') auf einen Druck von mehr als 221 Bar gebracht werden und auf eine Temperatur von mehr als 375°C.

36. Anlage nach einem der Patentansprüche 18 bis 35, **dadurch gekennzeichnet, dass** das Mittel (4) zur Energiegewinnung eine nach Ericsson modifizierte Stirlingmaschine umfasst.
